(19) Europäisches Patentamt
European Patent Office
Office européen des brevets

(11) Publication number: **0 059 865**
**B1**

(12) # EUROPEAN PATENT SPECIFICATION

(45) Date of publication of patent specification: **28.05.86**

(51) Int. Cl.$^4$: **C 08 F 297/08**

(21) Application number: **82101236.6**

(22) Date of filing: **18.02.82**

(54) **Process for producing propylene-ethylene block copolymer.**

(30) Priority: **06.03.81 JP 32216/81**
**21.04.81 JP 60226/81**
**19.08.81 JP 128781/81**
**22.10.81 JP 169007/81**

(43) Date of publication of application:
**15.09.82 Bulletin 82/37**

(45) Publication of the grant of the patent:
**28.05.86 Bulletin 86/22**

(84) Designated Contracting States:
**DE FR GB IT NL**

(56) References cited:
**FR-A-1 386 838**
**FR-A-2 091 602**
**US-A-3 859 387**

**PATENT ABSTRACT OF JAPAN, vol. 2, no. 76(C78), 16th June 1978, page 860;**

**The file contains technical information submitted after the application was filed and not included in this specification**

(73) Proprietor: **MITSUBISHI CHEMICAL INDUSTRIES LIMITED**
**5-2, Marunouchi 2-chome Chiyoda-ku**
**Tokyo 100 (JP)**

(72) Inventor: **Matuda, Yukimasa**
**1909-28, Ikusaka**
**Kurashiki-shi Okayama-ken (JP)**
Inventor: **Uehara, Yumito**
**1-71-33, Hiroe 3-chome**
**Kurashiki-shi Okayama-ken (JP)**
Inventor: **Nishihara, Yasuhiro**
**4-7, Amakidai 2-chome**
**Kurashiki-shi Okayama-ken (JP)**
Inventor: **Yamamoto, Hidetoshi**
**1-72-22, Hiroe 3-chome**
**Kurashiki-shi Okayama-ken (JP)**
Inventor: **Hasuo, Masayoshi**
**122-16, Shirahatanakacho Kanagawa-ku**
**Yokohama-shi (JP)**
Inventor: **Suga, Yoshinori**
**242-61, Kohgasaka**
**Machida-shi Tokyo (JP)**
Inventor: **Kitada, Hisashi**
**5-6, Tsutsujigaoka Midori-ku**
**Yokohama-shi Kanagawa-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 059 865 B1**

(72) Inventor: **Maruyama, Yasuo**
**23-4, Tanacho Midori-ku**
**Yokohama-shi Kanagawa-ken (JP)**
Inventor: **Gotoh, Junichi**
**23-4, Tanacho Midori-ku**
**Yokohama-shi Kanagawa-ken (JP)**
Inventor: **Takashima, Ryokichi**
**1-35-44, Hiroe 3-chome**
**Kurashiki-shi Okayama-ken (JP)**
Inventor: **Goko, Nobuaki**
**1-32-42, Hiroe 3-chome**
**Kurashiki-shi Okayama-ken (JP)**
Inventor: **Kawashima, Riichiro**
**1-100-1010, Hiroe 3-chome**
**Kurashiki-shi Okayama-ken (JP)**

(74) Representative: **Wächtershäuser, Günter, Dr.**
**Tal 29**
**D-8000 München 2 (DE)**

**Description**

Background of the invention

Field of the invention

The present invention relates to a continuous process for producing a propylene-ethylene block copolymer. More particularly, it relates to a continuous process for producing a propylene-ethylene block copolymer having excellent characteristics of cold shortness (or brittleness) and high impact strength which are the same or superior to those of a propylene-ethylene block copolymer obtained by a batch system.

Description of the prior art

It has been well-known to produce a propylene-ethylene block copolymer in order to improve impact strength and cold shortness over those of a homopolymer of propylene. In general, propylene is polymerized in the presence of a Ziegler-Natta catalyst composed of an organoaluminum compound and titanium trichloride or a titanium chloride supported by a magnesium compound in an inert liquid hydrocarbon or liquid propylene as a diluent in the first step; and copolymerizing propylene with ethylene in the presence of the propylene polymer produced in the first step to produce a block copolymer in the second step.

The polymerization process can be a batch process or a continuous process. The batch process causes certain disadvantages because of relatively low productivity and economical disadvantage and indispensable dispersion of qualities of the product from different production runs. On the other hand, the continuous process does not cause such disadvantages and is advantageous as an industrial process. However in view of the quality of the product, the following disadvantages are found.

When the first step and the second step are connected in series in the two step polymerization and propylene is polymerized in the first step and propylene and ethylene are copolymerized in the second step in a continuous process, the resulting block copolymer has inferior cold shortness and impact strength in comparison with those of the batch process and ultimate elongation (at break) is lowered and fish-eyes are formed in the product. As a main reason why such disadvantages are caused, the following reason may be considered.

When two or more reactors are connected in series to polymerize by the continuous process, complete mixing occurs in each reactor and results in certain distribution of the residence time of the catalyst or the polymer containing the catalyst in each reactor. When the residence time of the catalyst is short, the polymer having relatively low productivity of the polymer per unit of the catalyst (referred to as catalyst efficiency) is produced whereas when the residence time of the catalyst is long, the polymer having relatively high catalyst efficiency is produced. In each reactor, the polymer having low catalyst efficiency and the polymer having high catalyst efficiency are produced. As a result, the formulation of the total polymers has a broad distribution. Even when the an average residence time in each reactor is set to give a 15% content of the propylene-ethylene copolymer (referred to as EPR) produced in the second step, the resulting block copolymer may contain polymer grains containing as low as zero % EPR and polymer grains containing up to 100% EPR. Among then, the polymer grains having relatively high EPR content do not disperse in the homopolymer of propylene which results in the formation of fish-eyes in the final product. As a result, the final product has inferior cold shortness and impact strength.

Various processes have been proposed to overcome the disadvantages in the continuous polymerization.

The processes using many reactors have been proposed in Japanese Examined Patent Publication No. 25585/1978 and Japanese Unexamined Patent Publication No. 53990/1974. In such processes, a block copolymer having physical properties similar to those of the batch process can be obtained. However, the cost of construction of the apparatus is high depending upon the increased number of reactors to be uneconomical and a complicated quality control of the product is necessary. It is preferable to reduce the number of the reactors.

A process whereby an electron donor is added in the second step of the copolymerization of propylene and ethylene has been proposed in Japanese Examined Patent Publication No. 19542/1969 and Japanese Unexamined Patent Publication No. 115417/1980. This process still is unsatisfactory.

A process for reducing the molecular weight of a propylene-ethylene copolymer formed in the second step has been proposed in Japanese Unexamined Patent Publication No. 61278/1974. The process causes inferior impact strength of the product.

Further, it has been proposed in Unexamined Japanese Patent Publication 53—30686 to improve the copolymerization rate of ethylene and propylene by adding trimethyl aluminium, diethyl aluminium chloride or a mixture thereof in the second step. However, all examples given in this reference are directed to the batch process, which is disadvantageous as an industrial process and the product properties are unsatisfactory.

Summary of the invention

The present invention provides a continuous process for producing a propylene-ethylene block

copolymer in the presence of a catalyst comprising, as main components, a solid titanium-containing catalyst component and an organoaluminum compound having the formula

$$AlR^1_mCl_{3-m}$$

($R^1$ represents a $C_{1-20}$ hydrocarbon moiety; and m is such that $3 \geq m > 1.5$) wherein a homopolymer of propylene or a propylene-ethylene copolymer is produced in a first step by polymerizing propylene or both propylene and ethylene at a vapor phase propylene concentration of 90 mol % or higher based on the sum of propylene and ethylene and a propylene-ethylene block copolymer is produced in a second step by copolymerizing propylene and ethylene at a vapor phase propylene concentration of less than 90 mol % based on the sum of propylene and ethylene, in the presence of the polymer and the catalyst resulting from the first step, said process being characterized in that an aluminum compound having the formula

$$AlR^2_nX_{3-n}$$

($R^2$ represents a $C_{1-20}$ hydrocarbon moiety; X represents a halogen atom and n is such that $1.5 \geqq n \geqq 0$) is added to the components to be copolymerized in the second step.

Brief description of the drawings

Figures 1 to 4 are diagrams for illustrating embodiments of the process of the present invention.

Figure 1 shows a diagram illustrating intermittent feeding of a catalyst; and intermittent discharge of a polymer;

Figures 2 to 4 respectively show flow diagrams employing a classification system.

In Figure 1, the reference $T_1$ designates the time period for feeding a solid catalyst component in the first reactor in the first step; $T_2$ designates the time period during which the discharge of the polymer slurry from the first reactor is stopped after feeding the solid catalytic component; and $T_3$ designates the time period for discharging the slurry of the polymer from the first reactor.

In Figures 2 to 4 the symbols have the following meaning:

A: reactors for polymerization of propylene;
$A_1$: first reactor for polymerization of propylene;
$A_2$: second reactor for polymerization of propylene;
B: liquid cyclone;
$B_1$: first liquid cyclone;
$B_2$: second liquid cyclone;
C: hydraulic sedimentation classifier;
D: reactor for copolymerization of propylene and ethylene;
1: catalyst-feed pipe;
2: propylene-feed pipe;
3,3′: slurry discharge pipe;
4,4′: supernatant discharge pipe;
5,5′: concentrated polypropylene slurry discharge pipe;
6: discharge pipe of hydraulic sedimentation classifier
7: discharge pipe of hydraulic sedimentation classifier
8: ethylene feed pipe;
9: propylene feed pipe;
10: halogenated aluminum compound feed pipe;
11: polymer discharge pipe.

Detailed description of the preferred embodiments

The reason why the improved effect is attained by the addition of the specific aluminum compound in the second step of the process of the present invention is not clear. It is however, explained as follows:

The addition of the specific aluminum compound in the second step accelerates the rate decrease with time of the copolymerization of propylene and ethylene whereby the amount of polymer grains having relatively higher EPR content is reduced. The effect of the present invention is neither observed when only the average rate of the copolymerization is reduced by adding a poison to the catalyst such as an electron donor, whereby the degree of the rate decrease with time is not varied, nor when the degree of the rate decrease with time of the copolymerization is reduced by adding an activating agent such as trialkylaluminum, as described hereinbelow.

The process of the present invention will be further illustrated. The catalyst system used in the present invention comprises a solid titanium-containing catalyst component and an organoaluminum compound.

The solid titanium-containing catalyst component can be the conventional support type catalyst component obtained by mixing a solid magnesium compound, a titanium tetrahalide and an electron donor.

It is preferably a solid catalyst component comprising titanium trichloride as a main component. The

solid catalyst component comprising titanium trichloride as a main component can be the product obtained by reducing titanium tetrachloride with aluminum metal, hydrogen or an organoaluminum compound optionally grinding or mixing or pulverizing the product with an electron donor, and is especially a product containing an aluminum component at an atomic ratio of Al to Ti of 0.15 or less preferably 0.1 or less especially 0.02 or less and containing a chelating agent. The content of the chelating agent as a molar ratio of the chelating agent to titanium trichloride is 0.001 or more preferably 0.01 or more. As a typical example, it is composed of titanium trichloride, an aluminum halide compound having the formula

$$AlR^3_pX_{3-p}$$

($R^3$ represents a $C_{1-20}$ hydrocarbon moiety; X represents a halogen atom; and p is $0 \leqq p \leqq 2$) (atomic ratio of Al to Ti of titanium trichloride of 0.15 or less) and a chelating agent at a molar ratio of the chelating agent to the sum of the aluminum halide compound and titanium trichloride of 0.001 or more. For example, it has the formula

$$TiCl_3 \cdot (AlR^3_pX_{3-p})_s \cdot (C)_t$$

($R^3$ represents a $C_{1-20}$ hydrocarbon moiety; X represents a halogen atom; p is $0 \leqq p \leqq 2$; C represents a chelating agent; s is 0.15 or less; and t is 0.001 or more). Beside the $TiCl_3$ component, $AlR^3_pX_{3-p}$ component and the chelating agent, it is possible to incorporate a small amount of iodine, a titanium halide obtained by substituting part or whole of chlorine of $TiCl_3$ by iodine or bromine, an inorganic solid as a support such as $MgCl_2$ and MgO; a polyolefin powder such as polyethylene and polypropylene.

The chelating agent C can be ethers, thioethers, ketones, carboxylic acid esters, amines, carboxylic acid amides and polysiloxanes. It is especially preferable to use ethers or thioethers which can be the compounds having the formula

$$R^4—O—R^5 \text{ or } R^4—S—R^5$$

($R^4$ and $R^5$ respectively represent hydrocarbon moieties having 15 or less of carbon atoms).

$AlR^3_pX_{3-p}$ can be $AlCl_3$ or $AlR^3Cl_2$.

The solid titanium trichloride type catalyst complex can be easily produced (a) by precipitating it at 150°C or lower from a titanium trichloride-containing liquid obtained by dissolving a titanium trichloride in the presence of ether or thioether at 150°C or lower; or (b) by reducing titanium tetrachloride with an organoaluminum compound or an aluminum metal and treating the resulting titanium trichloride with a chelating agent or a halide compound which are disclosed in Japanese Examined Patent Publication No. 40348/1977, No. 3356/1978, No. 24194/1978, No. 28316/1979, No. 41040/1979, No. 8003/1980, No. 8451/1980, No. 8452/1980 and Japanese Unexamined Patent Publication No. 91794/1977, No. 12796/1978 and No. 116626/1980.

Beside the processes (a) and (b), it is also possible to produce it by reducing titanium tetrachloride with an organoaluminum compound, and adding the ether to the resulting titanium trichloride at a molar ratio of the ether to $TiCl_3$ of 0.5—5 and heating it at 50—120°C and separating the resulting solid as disclosed in Japanese Examined Patent Publication No. 27871/1979.

On the other hand, the organoaluminum compounds used as a cocatalyst in the first and second step has the formula

$$AlR^1_mCl_{3-m}$$

($R^1$ represents a $C_{1-20}$ hydrocarbon moiety; m is $3 \geqq m > 1.5$).

When the solid titanium-containing catalyst component is a support-type catalyst component using a solid magnesium compound as a support, it is preferable to use $AlR^1_3$ or a mixture of $AlR^1_3$ and $AlR^1_2Cl$.

On the other hand, in the case of the catalyst component made of $TiCl_3$ as a main component, it is preferable to use $AlR^1_2Cl$. It is possible to use diethylaluminum monochloride ($R^1$ is ethyl group and m=2). It is, however, preferable to use the organoaluminum compound ($R^1$ is n-propyl or n-hexyl group).

The specific aluminum compound added in the second step has the formula

$$AlR^2_nX_{3-n}$$

($R^2$ represents a $C_{1-20}$ hydrocarbon moiety; X represents a halogen atom especially chlorine atom and n is $1.5 \geqq n \geqq 0$). It is preferable to use $AlR^2_{1.5}Cl_{1.5}$, $AlR^2Cl_2$ or a mixture thereof.

In the typical aluminum compound to be added in the second step, $R^2$ can be methyl, ethyl, propyl, isopropyl, butyl, isobutyl, hexyl, octyl, decyl and dodecyl groups. In view of easy availability and easy handling, it is preferable to use ethylaluminum dichloride ($AlEtCl_2$), ethylaluminum sesquichloride ($AlEt_{1.5}Cl_{1.5}$) or a mixture thereof. It is also possible to use $AlCl_3$.

The ratio of the components in the solid titanium-containing catalyst component is usually a molar

ratio of Ti:$AlR^1_mCl_{3-m}$ of 1:1—100 preferably 1:2—40 and a molar ratio of $AlR^1_mCl_{3-m}$; $AlR^2_nX_{3-n}$ of 1:0.01—0.50 preferably 1:0.03—0.30.

The specific aluminum compound added in the second step can be the aluminum compound itself and also can be a complex of the aluminum compound and an electron donor or a mixture thereof.

The electron donors can be compounds which are capable of forming a complex with the specific aluminum compound such as organic oxygen-containing compounds such as ethers, ketones, carboxylic acids, esters and alcohols, organic sulfur-containing compounds such as thioethers, organic nitrogen-containing compounds such as amines and pyridines; organic silicon-containing compounds such as silanol, polysilanol and polysiloxanes and organic phosphorus-containing compounds such as phosphoric esters and phosphorous esters.

Suitable organic oxygen-containing compounds can be diethyl ether, dipropyl ether, dibutyl ether, diamyl ether, dihexyl ether, dioctyl ether, didecyl ether, didodecyl ether, diphenyl ether, anisol, acetone, methyl ethyl ketone, methyl methacrylate, ethyl methacrylate, methyl benzoate, ethyl benzoate, phenyl acetate, methanol, ethanol and butanol.

Suitable organic sulfur-containing compounds can be diethyl thioether, dipropyl thioether, dibutyl thioether, diamyl thioether, dihexyl thioether, dioctyl thioether and diphenyl thioether.

Suitable organic nitrogen-containing compounds can be triethylamine, tripropylamine, tributylamine, trioctylamine, aniline and pyridine.

Suitable organic silicon-containing compounds can be diphenylsilane diol, triphenylsilanol, trimethylsilanol, dimethylpolysiloxane, and diphenylpolysiloxane.

Suitable organic phosphorus-containing compounds can be triethyl phosphite, triphenyl phosphite, triphenyl phosphine oxide and triphenyl phosphine.

It is especially preferable to use an ether, a thioether or a carboxylic acid ester.

The amount of the electron donor is not critical and is usually in a range of 0.1 to 5 mol. per mol. of the specific aluminum compound.

The specific aluminum compound and the electron donor are preferably premixed in an inert hydrocarbon solvent and the resulting complex or mixtures is fed in the second step. The condition of the mixing, the temperature and time for the mixing is not critical.

In the process of the present invention, it is possible to use the titanium containing catalyst component and the aluminum compound cocatalyst together with an electron donor such as carboxylic esters, phosphorous esters and amines as a third component. When the third component is added, the content of the third component is such that the molar ratio of Ti:third component is 1:0.01—10, preferably 1:0.05—2.

The solid titanium-containing catalyst component can be used in the polymerization without any treatment. It is preferable to use it after a pretreatment with a small amount of an olefin such as propylene or ethylene in the presence of an organoaluminum compound. The pretreatment is effective for improving the physical properties of the polymer slurry such as bulk density.

The pretreatment is carried out at a temperature lower than the polymerization temperature, such as 20—60°C, to give a ratio of the polymer produced in the pretreatment to the solid catalyst component of 0.1—50:1 preferably 1—20:1 by weight.

In the process of the present invention, for producing a propylene-ethylene block copolymer in the presence of a catalyst comprising solid titanium-containing catalyst component and the organoaluminum compound as main components, the polymerization is carried out in two steps.

The polymerization can be carried in an inert hydrocarbon diluent such as propane, butane, hexane, heptane, benzene and toluene or also in liquid propylene or in a vapor phase.

In the first step, a homopolymerization of propylene or a copolymerization of propylene and ethylene at a vapor phase propylene concentration of 90 mol % or more (propylene/sum of propylene and ethylene) (hereinafter, referred to as the homopolymerization of propylene) is carried out in the presence of the solid titanium-containing catalyst component and the organoaluminum compound having the formula

$$AlR^1_mCl_{3-m}$$

In general, the polymerization temperature and time are selected to give a ratio of the homopolymer of propylene to the final polymer products ranging from 70 to 95 wt.%. The polymerization temperature is usually in a range of 40 to 100°C preferably 50 to 80°C. The polymerization temperature and the content of a molecular weight controlling agent are selected to give 1—150 of a melt flow index (referred to as MFI) of the homopolymer of propylene obtained in the first step.

The molecular weight controlling agent can be hydrogen or dialkylzinc and is preferably hydrogen. The concentration of hydrogen in the vapor phase (concentration of hydrogen to sum of propylene and ethylene) is usually in a range of about 1—30 mol %.

In the second step, the copolymerization of propylene and ethylene is carried out in the presence of the homopolymer of propylene produced in the first step, the newly added aluminum compound having the formula

$$AlR^2_nX_{3-n}$$

The concentration of propylene in the vapor phase is less than 90 mol % preferably in a range of 50 to 85

mol % which is the condition for producing a noncrystalline polymer as a by-product at the maximum degree and for improving the impact strength of the final polymer product at the maximum degree. The polymerization temperature and time are usually selected to give a 5—30 wt.% content of the propylene-ethylene copolymer based on the final polymer product. When the content of the propylene-ethylene copolymer is less than 5 wt.%, the improvement of the impact strength is small whereas when it is more than 30 wt.%, the product has disadvantageously inferior bulk density and free flowability. The polymerization temperature is usually in a range of 25—70°C preferably 25—65°C. When it is higher than 70°C, the resulting propylene-ethylene block copolymer has inferior free flowability and coagulation of polymer grains is disadvantageously caused. The polymerization temperature and the amount of hydrogen as the molecular weight controlling agent are selected to give a propylene-ethylene copolymer having a MFI of 0.1. The concentration of hydrogen in the vapor phase is usually in a range of 0.5 to 30 mol %. When the MFI is higher than 0.1, the improvement of the impact strength is not satisfactory whereas when the MFI is extremely small such as less than $10^{-7}$, the improvement of the impact strength is high, but the Barus effect in an injection molding is large and dimensional stability is deteriorated. The content of ethylene component in the final polymer product is preferably in a range of 2 to 30 wt.%.

In the continuous system, a different reactor is used for each of the steps. The reactor in the first step is connected in series to the reactor in the second step. In each step, a plurality of reactors can be used. In the first step, the polymerization can be carried out in two reactors which are connected in series.

A complete mixing type reactor is usually used in the process of the present invention whereby a certain constant distribution of residence times of the reaction products is obtained. That is, the reaction mixture discharged from the first step contains catalyst grains which are discharged by short-passing through the reactor without contributing to the polymerization; small polymer grains with unsatisfactory growth and high molecular weight and/or coarse polymer grains produced in a long residence time. The grains formed in the short-pass and the coarse grown grains cause formation of a gel in the copolymerization in the second step. The appearance of the shaped product is in a shaped form is inferior and cold shortness, the impact strength and the ultimate elongation may be deteriorated.

In order to overcome the problem, the addition of the specific aluminum compound in the second step is effective. In order to further improve the process, certain effective process is considered in view of chemical engineering. One of the improvements is to combine the feeding of the solid catalyst component and the discharge of the polymer under specific conditions. The other improvement is to employ a classification system.

The improved feeding of the solid catalytic component and the improved discharge of the polymer will be illustrated as follows:

In the first step, the solid titanium-containing catalyst component is intermittently fed into the reactor and the discharge of the polymer from the reactor is intermittently carried out.

Referring to Figure 1, the operation will be illustrated. Figure 1 is a diagram for illustrating an embodiment of the present invention. The polymerization of propylene in the first step is carried out with two reactors and the copolymerization in the second step is carried out in one reactor to attain the slurry polymerization.

In Figure 1, the feedings of the starting materials; the feeding of the catalyst, the discharge of the slurry and the level of the slurry in the reactors are briefly shown. (Reference is also made to page 24). In Figure 1, the feeding of propylene, the feeding of hydrogen, the feeding of the second and third catalyst components in the first reactor, the feeding of additional propylene, the feeding of hydrogen, the discharge of a slurry in the second reactor in the first step and the feeding of ethylene, the feeding of additional hydrogen, the feeding of the catalyst component (A1 compound) and the discharge of the slurry in the reactor for copolymerization in the second step are shown by horizontal linear arrow lines (long arrow). They show the feeding or discharge at substantially constant rates per unit of time. The feeding of the solid catalytic component in the first reactor in the first step is shown by lines drawn at interval (short arrow). They show that the catalyst is fed during the time shown by the lines drawn at interval. The discharge of the slurry in the same reactor is shown by the lines drawn at interval. The discharge of the slurry in the same reactor is shown by the lines drawn at interval. They show that the slurry is discharged during the time shown by the lines drawn at interval.

The triangular form of the levels in the first and second reactors in the first step shows that the levels in the reactors are respectively increased and decreased depending upon the intermittent discharge of the polymer slurry from the first reactor. The horizontal line of the level in the reactor for copolymerization in the second step shows the substantially unchanged level of the slurry in the reactor.

In the first reactor in the first step, the operation as from the end of the discharge of the polymer slurry will be illustrated. When the discharge of the polymer slurry is stopped, the feeding of the dispersion of the solid titanium-containing catalyst component in through the catalyst feeding line is immediately started. The feed amount corresponds to the amount of the polymerization in one cycle until the next feeding (the time shown as C in Figure 1). The feeding can be carried out by using a constant quantitative pump or also by directly compressing from the tank. The time required for the feeding of the solid catalyst component (the time shown as $T_1$ in Figure 1) is preferably short and depends upon the capacity of the supply pump and is usually in a range of 2 to 15 min.

The discharge of the polymer from the first reactor in the first step is stopped during the time of feeding

the solid catalyst component (the time shown as $T_1$ in Figure 1) and during a certain period of time thereafter (the time shown as $T_2$ in Figure 1). Thus, the solid catalyst component is not discharged from the first reactor during this time and the polymer is grown to reach the predetermined catalytic efficiency. Therefore, the short-pass of the solid catalyst component to the reactor for copolymerization is prevented.

The time $T_2$ is selected from the range of 5 to 50% of the total residence time of the components in the reactor for polymerization of propylene in the first step (when two reactors are used in the first step, the total of the residence times in the two reactors). The present invention concerns a continuous process for producing a propylene-ethylene block copolymer. Thus, in the case where a plurality or reactors are used in the first step, the time $T_2$ must be shorter than the residence time in the first reactor in the first step.

When the time $T_2$ is shorter than 5% of the total residence time, the effect for the intermittent discharge of the polymer is not satisfactory whereas when it is longer than 50%, the effect is not further increased and on the other hand, the volume productivity of the reactors is reduced, which is unfavorable in an industrial process. The time $T_2$ in practice is 15 min or longer, preferably 20 min or longer.

The intermittent feeding of the solid catalyst component prevents the disadvantages caused by the shortpass. On the other hand, the second component of the catalyst (organoaluminum compound) and the third component are homogeneously dispersed in the reaction system whereby it is unnecessary to feed them intermittently and it is possible to feed them continuously. However, it is possible to premix the first, second and third components of the catalyst out of the reactors and to feed them according to the intermittent feed schedule for the first component.

After the time $T_2$ from the end of the feeding of the solid catalyst component has elapsed the discharge of the polymer is restarted. The time required for the discharge (the time $T_3$ in Figure 1) is not critical and is preferably equal to the time during which the discharge of the polymer is stopped. The discharge flow is preferably larger than the production of polymer in the reactor. It is preferably 1.5 to 3 times as large as the production of polymer.

The discharge of the polymer is stopped again after the predetermined time and the feeding of the solid catalyst component is restarted at substantially the same time.

Propylene as the starting material and the medium are usually continuously fed at constant rates. In such case, the level of the slurry in the first reactor in the first step (or the level of powder in the case of the vapor phase polymerization) raises as the discharge of the polymer is stopped and the level in the second reactor connected to the first reactor is correspondingly lowered. During the discharge of the polymer, the level of the first reactor is lowered and the level of the second reactor is raised (see levels in Figure 1). The variation caused by the intermittent discharge of the polymer from the first reactor to the second reactor can be absorbed by the variation of the levels in the reactors whereby the discharge from the second reactor can be continuously carried out to maintain the stable operation.

When the polymerization of propylene in the first step is carried out in only one reactor, the second reactor connected in series is the reactor for copolymerization in the second step. In such a case, the ratio of the homopolymerization to the copolymerization varies as a pulsation, which is caused by the intermittent discharge of the polymer from the first reactor. Therefore, the operation is not easy. It is preferable to carry out the polymerization of propylene in the first step by using two or more reactors. In such a case, a polymer of propylene grown in substantially constant grain size is continuously obtained from the second reactor in the first step and is fed into the reactor for copolymerization in the following second step.

In the reactor for copolymerization of propylene and ethylene in the second step, the polymer continuously fed from the first step, the medium, the dissolved monomer, ethylene, propylene, the additional hydrogen, the additional aluminum halide compound are fed.

One embodiment placing a classification system between the first step and the second step will be illustrated.

In the process, the slurry of polypropylene is discharged from the reactor and is fed into a classification system. In the classification system, it is separated into a slurry of fine grains which will be returned to the reactor for polymerization of propylene and a slurry of coarse grains which will be fed into the following reactor for copolymerization of propylene and ethylene.

As a classification system used in the process of the present invention it is possible to use a known classifier such as a liquid cyclone and it is preferable to use as a classification system a combination of a concentrator and a hydraulic sedimentation classifier so as to effectively perform the classification.

The operation of the combination of a concentrator and a hydraulic sedimentation classifier as a classification system will be illustrated.

The polypropylene produced in the first step is discharged from the reactor at a concentration of the slurry of 5 to 60 wt.%, preferably 20 to 50 wt.%, and is fed into the concentrator. The polypropylene slurry fed into the concentrator is separated into a concentrated polypropylene slurry and a supernatant. The concentration of the concentrated polypropylene slurry is controlled in a range of 5 to 75 wt.% preferably 20 to 70 wt.%. The concentration of the grains in the supernatant is preferably low and is usually 0.5 wt.% or lower, especially in a range of 0.001 to 0.1 wt.%. The ratio of the concentrated slurry of polypropylene to the supernatant depends on the composition of the polypropylene slurry and the property of the concentrator and is usually in a range of 50:50 to 99:1 by weight.

The concentrator used in the process of the present invention can be a liquid cyclone, a centrifugal separator or a filter. The liquid cyclone is especially preferable because of easy operation in the continuous

operation, compact and economical and small area of installation. When a plurality of concentrators are connected in series so that the supernatant from the first concentrator is fed to the second concentrator, the concentration of grains in the supernatant discharged from the second concentrator can be further reduced to increase the effect of classification by means of a hydraulic sedimentation classifier.

The form of the liquid cyclone is immaterial. It is preferable to consider a size to give smaller grain sizes in the classification. A slurry feed pipe preferably has a diameter allowing for a slurry feed linear velocity of 1 m/s or higher, especially 3 m/s or higher. The liquid cyclone preferably has the smallest inner diameter as possible as far as the corresponding pressure loss is allowable.

The concentrated slurry of polypropylene and the supernatant discharged from the concentrator are respectively fed to the upper part and the lower part of the hydraulic sedimentation classifier to countercurrently contact them in the classifier cylinder. The polypropylene sedimented by the countercurrent contact is discharged from the bottom of the classifier and is fed into the reactor for copolymerization of propylene and ethylene. The unsedimented polypropylene is discharged from the upper part of the classifier and is returned to the reactor for polymerization of propylene. The ratio of the slurry returned to the reactor for polymerization of propylene to the slurry fed into the reactor for copolymerization of propylene and ethylene is in the range of 30:70 to 99:1, preferably 50:50 to 98:2 by weight.

The hydraulic sedimentation classifier is not critical and is preferably one having a ratio of the cylinder length to the diameter of 2 or more and has a tapered bottom connected to the lower part of the cylinder.

The residence time of the polypropylene slurry in the classifier depends on the capacity of the classifier and the rate of the discharge of the polypropylene slurry in the hydraulic sedimentation system and is usually 1 min or longer, preferably 3 min or longer, and is decided by the capacity of the classifier or the rate of discharge.

Referring to the drawings, the operation will be illustrated. Figures 2 to 4 are flow diagrams of one embodiment for producing a propylene-ethylene block copolymer of the present invention.

Figure 2 is a flow diagram of the embodiment placing a classification system between the reactor for polymerization of propylene and the reactor for copolymerization of propylene and ethylene. Referring to Figure 2, the embodiment will be illustrated as follows.

A catalyst for the polymerization of propylene is fed through the catalyst feed pipe (1) into the reactor A for polymerization of propylene and liquid propylene is fed through the propylene feed pipe (2) into the reactor A to perform the polymerization of propylene. The resulting polypropylene slurry is discharged from reactor A and is fed through the slurry discharge pipe (3) to the liquid cyclone B. In the liquid cyclone B, it is separated into a concentrated polypropylene slurry and a supernatant. The concentrated polypropylene slurry is discharged from the bottom of the liquid cyclone B and is fed through the concentrated polypropylene slurry discharge pipe (5) to the upper part of the hydraulic sedimentation classifier C. On the other hand, the supernatant is discharged from the upper part of the liquid cyclone B and is fed through the supernatant discharge pipe (4) to the lower part of the hydraulic sedimentation classifier C. The concentrated polypropylene slurry and the supernatant are countercurrently contacted in the classification cylinder of the hydraulic sedimentation classifier C and the polypropylene sedimented by the contact is discharged from the bottom of the hydraulic sedimentation classifier C and is fed through the discharge pipe (7) to the reactor for copolymerization of propylene and ethylene D. On the other hand, the polypropylene remaining (not sedimented by the hydraulic sedimentation) is discharged from the upper part of the hydraulic sedimentation classifier C and is returned through the discharge pipe (6) to reactor A for polymerization of propylene. The polypropylene obtained by the hydraulic sedimentation is fed into reactor D for copolymerization of propylene and ethylene. Ethylene and, if necessary, additional propylene are respectively fed through the ethylene feed pipe (8) and the propylene feed pipe (9) to perform the copolymerization of propylene and ethylene. In the process of the present invention, it is indispensable to feed the specific aluminum halide compound through the aluminum halide compound feed pipe (10) to the reactor for copolymerization of propylene and ethylene. The resulting propylene-ethylene block copolymer is discharged through the polymer discharge pipe (11) as the final product.

Figure 3 is a flow diagram of the embodiment using two liquid cyclones connected in series in the classification system. The supernatant discharged from the first liquid cyclone $B_1$ is fed to the second liquid cyclone $B_2$. In the second liquid cyclone $B_2$, the fine grains contained in the supernatant discharged from the first liquid cyclone $B_1$ are further separated to obtain the supernatant which does not substantially contain polypropylene grains. The supernatant is fed through the supernatant discharge pipe (4) to the hydraulic sedimentation classifier C. When two liquid cyclones are used the concentration of grains in the supernatant fed from the second liquid cyclone $B_2$ to the hydraulic sedimentation classifier C is almost zero and the classification effect in the hydraulic sedimentation classifier is increased. Thus, the amount of fine polypropylene grains fed to the reactor for copolymerization of propylene and ethylene can be extremely reduced.

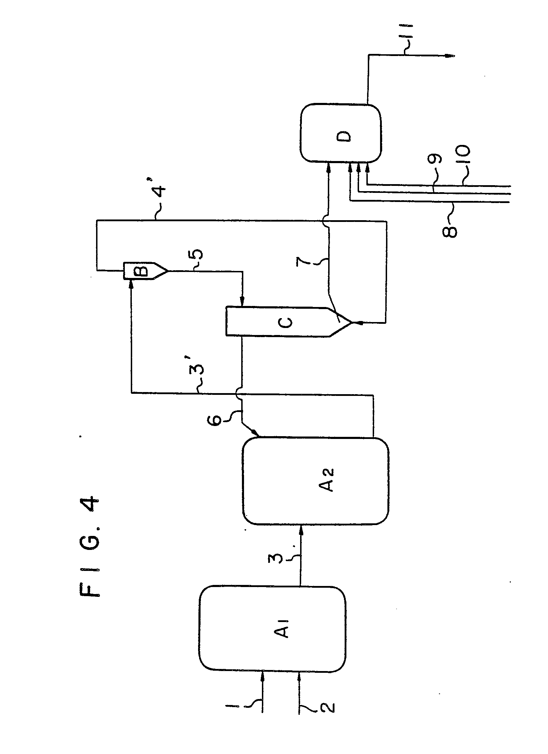

Figure 4 is flow diagram of an embodiment wherein propylene is polymerized in two reactors. In Figure 4, the references A, B, C, D, 1, 2, 3, 4 .... designate the identical parts shown in Figures 2 and 3. In this specification, the term "the rate decrease with time" means to decrease or the phenomenon of decrease of the catalytic activity (polymerization activity of catalyst), dependent upon time.

The invention will be further illustrated by certain Examples and References which are provided herein

for purpose of illustration only and are not intended to be limiting to any manner unless otherwise specified.

In the Examples, the measurements are as follows:

The melt flow index MFI (g/10 min) is measured according to ASTM D-1238-70 at 230°C under a pressure of 2.16 kg.

The brittle point temperature $T_b$ (°C) is measured in the direction of flow of a molten resin (MD) and in the perpendicular direction (TD) according to ASTM-D-746, using a specimen obtained by punching a flat sheet having a thickness of 2.0 mm.

The first yield strength YS (N/cm$^2$) and the ultimate elongation UE(%) are measured by a tensile test of a dumbbell specimen obtained by punching from a pressed sheet having a thickness of 1.0 mm according to ASTM D-638-72. This is measured at 20°C unless otherwise specified.

The Izod impact strength (N · cm/cm) is measured by using a notched rectangular specimen obtained by punching from a pressed sheet having a thickness of 5.0 mm according to ASTM D-256 at 20°C unless otherwise specified.

The dart drop impact strength (DDIS) is measured on a flat plate having a thickness of 2 mm held on by a sample holder having a diameter of 65 mm at −40°C. A variable load dart having a diameter of 2.54 cm (1 inch) is let fall from a height of 80 cm. The load for breaking 50% of specimens is expressed as an impact energy according to ASTM D-1709.

Fish-eyes are measured by bending a press sheet having a thickness of 1 mm and observing the number of fish-eyes and classifying it according to the following rating.

| Rating | Fish-eyes |
|---|---|
| ◎ | substantially none |
| ○ | quite small |
| Δ | small |
| × | many |

Fine gels which are not observed with the naked eye are counted in the following manner. A film having a thickness of 30 μm is prepared, using a die having a diameter of 100 mm and cutting the film in a size of 250 cm$^2$. The total number of fine gels is counted by macrophotography. The number of the fine gels is shown by the following ratings.

| Rating | Number of fine gels |
|---|---|
| ○ | less than 50 |
| Δ | 50 or more and less than 300 |
| × | 300 or more and less than 2000 |
| ×× | 2000 or more |

The stabilizers, the aluminum compounds and the electron donors used in the examples and references are shown as follows.

| Stabilizer | |
|---|---|
| BHT | 2,6-di-t-butyl-p-cresol |
| Irganox | pentaerythritol tetrakis[3-(4-hydroxy-3,5-di-t-butylphenyl)propionate] (Ciba-Geigy) |
| Aluminum compound | |
| TEA | triethylaluminum $Al(C_2H_5)_3$ |
| DEA | diethylaluminum monochloride $Al(C_2H_5)_2Cl$ |
| DPA | di-n-propylaluminum monochloride $Al(n{-}C_3H_7)_2Cl$ |
| EASC | ethylaluminum sesquichloride $Al(C_2H_5)_{1.5}Cl_{1.5}$ |
| EADC | ethylaluminum dichloride $Al(C_2H_5)Cl_2$ |
| PADC | n-propylaluminum dichloride $Al(n{-}C_3H_7)Cl_2$ |
| BADC | i-butylaluminum dichloride $Al(i{-}C_4H_9)Cl_2$ |
| Electron donor | |
| DBE | di-n-butyl ether $(n{-}C_4H_9)_2O$ |
| DOE | di-n-octyl ether $(n{-}C_8H_{17})_2O$ |
| DPE | diphenyl ether $(C_6H_5)_2O$ |
| DBS | di-n-butyl thioether $(n{-}C_4H_9)_2S$ |
| DAE | di-i-amyl ether $[(CH_3)_2CHCH_2CH_2]_2O$ |
| MMA | methyl methacrylate $CH_2C(CH_3)COOCH_3$ |
| EtOH | ethanol $C_2H_5OH$ |

The examples and references are shown in Tables 1 to 4 as follows:
Table 1: Examples 1—14
Table 2: References 1—8
Table 3: Examples 15—28
Table 4: Examples 30—33

Preparation of catalyst 1

(A) Preparation of solid titanium trichloride type catalytic complex

Into a 10 liter autoclave purged with nitrogen, 5.0 l. of n-hexane and 3.0 mol. of titanium tetrachloride were charged and 2.7 mol. of di-n-octyl ether was added. The mixture was stirred at 25°C and a solution of 1.0 mol. of diethylaluminum monochloride in 0.5 l. of n-hexane was added dropwise to obtain a homogeneous solution of titanium trichloride in n-hexane in greenish black-brown color. The solution of titanium trichloride was heated to 95°C. During the heating, a formation of purple precipitate of titanium trichloride was found. After stirring the reaction mixture at 95°C for 1 hour, the precipitate was filtered and repeatedly washed with n-hexane to obtain fine powdery solid titanium trichloride type catalytic complex. An elemental analysis showed that the catalytic complex had the formula:

$$TiCl_3(AlCl_3)_{0.003}[(n{-}C_8H_{17})_2O]_{0.11}$$

(B) Pretreatment with propylene

Into a 20 liter autoclave purged with nitrogen, 12.5 l of n-hexane was charged and stirred and 1.6 mol of di-n-propylaluminum monochloride and the solid titanium trichloride type catalytic complex obtained by the step (A) were charged to give 250 g of $TiCl_3$ component. Then, the temperature in the autoclave was controlled to 30°C and propylene gas was fed with stirring at the same temperature until 1250 g of

propylene had polymerised. The resulting precipitate was separated and repeatedly washed with n-hexane to obtain a polypropylene-containing titanium trichloride.

Preparation of catalyst 2

(A) Preparation of solid titanium trichloride type catalytic complex

Into a 10 liter autoclave purged with nitrogen, 1.0 l of n-hexane and 2.0 mol. of titanium tetrachloride were charged and the mixture was cooled to 5°C and stirred and a solution of 4.0 mol of ethylaluminum sesquichloride in 2.0 l of n-hexane was added dropwise during 30 min. After the addition, the reaction mixture was stirred at 5°C for 2 hours in aging and the resulting precipitate was repeatedly washed with n-hexane to obtain a reddish purple solid product. n-Hexane was added to give 3.0 l and then 0.42 l of diisoamyl ether was added to react them at 30°C for 1 hour while stirring. The resulting precipitate was repeatedly washed with n-hexane and dried under a reduced pressure to obtain a brown product. Then, 8 mol of titanium tetrachloride was added to the product to react them at 35°C for 1.5 hours and the precipitate was repeatedly washed with n-hexane to obtain a purple solid titanium trichloride type catalytic complex. An elemental analysis showed that the catalytic complex has the formula:

$$TiCl_3 \cdot (AlCl_3)_{0.01}[(i\text{—}C_5H_{11})_2O]_{0.11}$$

(B) Pretreatment with propylene

In accordance with the process of Preparation of catalyst 1 (B), the solid titanium trichloride type catalytic complex obtained in the step (A) was pretreated with propylene.

Example 1

Three reactors each equipped with a stirrer which respectively had capacities of 170 l, 70 l and 60 l were connected in series and used for a continuous polymerization in two steps. In the first and second reactors, a homopolymerization of propylene was carried out. In the third reactor, a copolymerization of propylene and ethylene was carried out. Into the first reactor, liquid propylene; hydrogen at a content of 5.5 mol % as a vapor phase hydrogen concentration; the titanium trichloride obtained in the step (B) of Preparation of catalyst 1; di-n-propylaluminum monochloride (DPA) at a molar ratio of 8 based on $TiCl_3$; phenyl acetate at a molar ratio of 0.13 based on $TiCl_3$ were charged. The polymerization temperature in the first reactor was 70°C and the average residence time (polymerization time) was 4.5 hours. The reaction mixture discharged from the first reactor was fed into the second reactor and additional liquid propylene and hydrogen at a content of 6 mol % as a vapor phase hydrogen concentration were also continuously fed. The polymerization temperature in the second reactor was 67°C and the average residence time (polymerization time) was 1.6 hours. The reaction mixture discharged from the second reactor was fed into the third reactor and liquid propylene and ethylene were continuously fed to give 65 mol % of a vapor phase propylene concentration and the vapor phase hydrogen concentration was controlled to be 3 mol %. Ethylaluminum dichloride (EADC) was charged to give a molar ratio of EADC/DPA of 0.08. The polymerization temperature in the third reactor was 45°C and the average residence time (polymerization time) was 1.5 hours.

The reaction mixture discharged from the third reactor was flushed to purge the unreacted propylene and the polymer obtained by the polymerization was separated as a polymer powder and continuously treated at 120°C with propylene oxide gas. The resulting powdery product was admixed with 0.1 wt.% of BHT, 0.1 wt.% of Irganox®, 0.2 wt.% of dilaurylthiodipropionate and 0.2 wt.% of calcium stearate. The mixture was kneaded at 220°C by a uniaxial extruding machine having an inner diameter of 40 mm and it was pressed to form a press sheet. Various physical properties of the product were measured. As a result, substantially no fish-eyes were found: ◎; MFI was 2.3; the brittle point temperature $T_b$ was −23.2°C; the ultimate elongation UE was 762%; the first yield strength YS was 2597 $N/cm^2$ and the Izod impact strength was 112.7 N · cm/cm.

Examples 2 to 9

The homopolymerization of propylene was carried out in the first reactor and the second reactor under the same condition set forth in Example 1. Each copolymerization of propylene and ethylene in the third reactor was carried out by feeding aluminum compounds, the kind and amount of which are shown in Table 1. The polymerization conditions in the third reactor were varied as shown in Table 1 so as to give the same ratio of the polymer produced in the third reactor. In accordance with the process of Example 1 except said modification, each polymerization and each kneading were carried out to produce each press sheet and various physical properties were measured. The results are shown in Table 1.

References 1 to 4 (Comparative Examples)

The homopolymerization of propylene was carried out in the first reactor and the second reactor under the same condition as set forth in Example 1.

In a copolymerization of propylene and ethylene in the third reactor, no additive was not added in Reference 1; triethylaluminum ($AlEt_3$) was added in Reference 2; methyl methacrylate (MMA) was added in Reference 3 and ethanol (EtOH) was added in Reference 4 at each content shown in Table 2. The polymerization conditions in the third reactor were varied as shown in Table 2 so as to give the same ratio

of the polymer in the third reactor. In accordance with the process of Example 1 except said modification, each polymerization and each kneading were carried out to produce each press sheet and various physical properties were measured. The results are shown in Table 2.

By addition of a specific aluminum compound in the copolymerization of propylene and ethylene as in the examples and in the references, block copolymers for products which have less fish-eyes, a low brittle point temperature as improved cold shortness; a large ultimate elongation and a high impact strength can be obtained in accordance with the process of the present invention.

Examples 10 to 14

The reactors used in Example 1, each equipped with a stirrer were used for a continuous polymerization in two steps. In the first and second reactors, a homopolymerization of propylene was carried out. In the third reactor, a copolymerization of propylene and ethylene was carried out. Into the first reactor, liquid propylene; hydrogen at a content of 5.5 mol % as a vapor phase hydrogen concentration; the titanium trichloride obtained in the step (B) of Preparation of catalyst 2; diethylaluminum monochloride (DEA) at a molar ratio of 8 based on $TiCl_3$; phenyl acetate at a molar ratio of 0.2 based on $TiCl_3$ were charged. A polymerization temperature in the first reactor was 70°C and an average residence time (polymerization time) was 4.5 hours in the first reactor. The reaction mixture discharged from the first reactor was fed into the second reactor and additional liquid propylene and hydrogen at a content of 6 mol % as a vapor phase hydrogen concentration were also continuously fed. A polymerization temperature in the second reactor was 67°C and an average residence time (polymerization time) was 1.6 hours. The reaction mixture discharged from the second reactor was fed into the third reactor and liquid propylene and ethylene were continuously fed to give 65 mol % of a vapor phase propylene concentration and a vapor phase hydrogen concentration was controlled to be 3 mol %. Each aluminum compound was charged. The kind and the amount of the aluminum compound are shown in Table 3. Each polymerization condition in the third reactor is shown in Table 3.

The reaction mixture discharged from the third reactor was flushed to purge the unreacted propylene and the polymer obtained by the polymerization was separated as a polymer powder and continuously treated at 120°C with propylene oxide gas. The resulting powdery product was admixed with 0.1 wt.% of BHT as an additive 0.1 wt.% of "Irganox®: 1010" 0.2 wt.% of dilaurylthiodipropionate and 0.2 wt.% of calcium stearate. The mixture was kneaded at 220°C by a uniaxial extruding machine having an inner diameter of 40 mm for two times and it was pressed to form a press sheet. Various physical properties of the product were measured. The results are shown in Table 1. In accordance with the process of the present invention, fish-eyes, the brittle point $T_b$, the ultimate elongation UE and the Izod impact strength are remarkably improved.

References 5 and 6 (Comparative Examples)

In accordance with the process of Example 1 except varying the conditions in the third reactor as shown in Table 2 without varying the conditions in the first and second reactors, each polymerization and each test were carried out. The results are shown in Table 2.

References 7 and 8 (Comparative Examples)

Three reactors, each equipped with a stirrer and which respectively had capacities of 170 l, 70 l and 60 l were connected in series and a 5 l vessel was placed between second and third reactors. These reactors and vessel were used for a continuous polymerization in two steps. In the first and second reactors, a homopolymerization of propylene was carried out as the first step under the same conditions used for the homopolymerization of propylene in Example 1. The reaction mixture discharged from the second reactor was fed into the 5 l vessel and $AlEtCl_2$ was charged to give a molar ratio of $AlEtCl_2$ /DPA of 0.08 in Reference 7 and 0.16 in Reference 8. A treating temperature in the 5 l vessel was 67°C and an average residence time (treating time) was 5 min. The reaction mixture discharged from the vessel was fed into the 60 l third reactor and liquid propylene and ethylene were continuously fed to carry out a copolymerization of propylene and ethylene as the second step. The propylene concentration, the hydrogen concentration and the polymerization temperature were respectively kept at 65 mol %, 3 mol % and 45°C the same as those of the copolymerization of propylene and ethylene in Example 1, however, the average residence time (polymerization time) was varied as shown in Table 2.

The reaction mixture discharged from the third reactor was flushed and the product was treated and kneaded as set forth in Example 1 and various physical properties were measured. The results are shown in Table 2.

In comparison with the examples adding $AlEtCl_2$ in the third reactor (copolymerization of propylene and ethylene in the second step), the fish-eye and the brittle point temperature of the products obtained in References 7 and 8 are inferior, where $AlEtCl_2$ is reacted with a DPA-cocatalyst and the reaction product is added to the third reactor in the copolymerization of propylene and ethylene in the second step. The effect of the addition of $AlEtCl_2$ was not found. In Reference 8, the ratio of the propylene-ethylene copolymer to the final polymer product did not reach the 13—14% desired ratio.

In the process of References 7 and 8, only the copolymerization rate in the second step is reduced and the rate decrease with time of the copolymerization is not accelerated. Therefore, the effect of the present

invention could not be attained. In the process of the present invention, it is important to add the aluminum compound having the formula

$$AlR^2_nX_{3-n}$$

directly in the copolymerization in the second step without previous mixing and reaction with a cocatalyst.

TABLE 1

| | Exp. 1 | Exp. 2 | Exp. 3 | Exp. 4 | Exp. 5 |
|---|---|---|---|---|---|
| Third reactor<br>Kind<br>$AlR^2_nCl_{3-n}$ | EADC | EADC | EADC | EADC | EADC |
| $AlR^2_nCl_{3-n}/AlR^1_mCl_{3-m}$ (molar ratio) | 0.08 | 0.04 | 0.16 | 0.25 | 0.35 |
| Polymerization temp. (°C) | 45 | 45 | 45 | 45 | 45 |
| Polymerization time (h) | 1.5 | 1.2 | 2.2 | 4.0 | 6.0 |
| Vapor phase hydrogen concentration (mol %) | 3 | 3 | 3 | 2.5 | 2.5 |
| Vapor phase propylene concentration (mol %) | 65 | 65 | 65 | 65 | 65 |
| Ratio of polymer (3rd reactor) to total yield (%) | 13.5 | 13.4 | 13.5 | 13.4 | 11.5 |
| Final polymer product<br>MFI (g/10 min) | 2.3 | 2.2 | 2.3 | 2.1 | 2.1 |
| Fish-eye | ◎ | ○ | ◎ | ◎ | ◎ |
| Brittle point temp. (°C) $T_b$ (MD) | −23.2 | −15.4 | −24.5 | −25.1 | −24.8 |
| Ultimate elongation UE (%) | 762 | 736 | 781 | 776 | 795 |
| First yield strength YS ($N/cm^2$) | 2597 | 2577 | 2626 | 2548 | 2695 |
| Izod impact strength (N · cm/cm) | 112.7 | 115.6 | 102.9 | 122.5 | 99.9 |

TABLE 1'

| | Exp. 6 | Exp. 7 | Exp. 8 | Exp. 9 | Exp. 10 |
|---|---|---|---|---|---|
| Third reactor<br>Kind<br>$AlR^2_nCl_{3-n}$ | EASC | EASC | PADC | BADC | EADC |
| $AlR^2_nCl_{3-n}$ /$AlR^1_mCl_{3-m}$ (molar ratio) | 0.08 | 0.35 | 0.10 | 0.10 | 0.08 |
| Polymerization temp. (°C) | 45 | 45 | 45 | 45 | 45 |
| Polymerization time (h) | 1.3 | 5.5 | 1.5 | 1.5 | 1.5 |
| Vapor phase hydrogen concentration (mol %) | 3 | 2.5 | 3 | 3 | 3 |
| Vapor phase propylene concentration (mol %) | 65 | 65 | 65 | 65 | 65 |
| Ratio of polymer (3rd reactor) to total yield (%) | 13.6 | 12.5 | 13.4 | 13.3 | 13.1 |
| Final polymer product<br>MFI (g/10 min) | 2.1 | 2.4 | 2.1 | 2.2 | 2.1 |
| Fish-eye | Δ | ◎ | ◎ | ○ | ◎ |
| Brittle point temp. (°C) $T_b$ (MD) | −12.5 | −20.8 | −22.6 | −18.4 | −21.4 |
| Ultimate elongation UE (%) | 688 | 766 | 758 | 745 | 785 |
| First yield strength YS ($N/cm^2$) | 2548 | 2597 | 2567 | 2616 | 2479 |
| Izod impact strength (N · cm/cm) | 120.5 | 105.8 | 115.6 | 104.8 | 109.7 |

TABLE 1′

| | Exp. 11 | Exp. 12 | Exp. 13 | Exp. 14 |
|---|---|---|---|---|
| Third reactor<br>Kind<br>$AlR^2_nCl_{3-n}$ | EADC | EASC | EASC | BADC |
| $AlR^2_nCl_{3-n}$ /$AlR^1_mCl_{3-m}$ (molar ratio) | 0.16 | 0.08 | 0.20 | 0.08 |
| Polymerization temp. (°C) | 45 | 45 | 45 | 45 |
| Polymerization time (h) | 2.2 | 1.5 | 2.3 | 1.5 |
| Vapor phase hydrogen concentration (mol %) | 3 | 3 | 3 | 3 |
| Vapor phase propylene concentration (mol %) | 65 | 65 | 65 | 65 |
| Ratio of polymer (3rd reactor) to total yield (%) | 13.0 | 13.4 | 13.5 | 13.0 |
| Final polymer product<br>MFI (g/10 min) | 2.2 | 2.4 | 2.2 | 1.9 |
| Fish-eye | ◎ | ○ | ◎ | ○ |
| Brittle point temp. (°C) $T_b$ (MD) | −25.6 | −14.3 | −18.8 | −17.7 |
| Ultimate elongation UE (%) | 780 | 754 | 788 | 775 |
| First yield strength YS ($N/cm^2$) | 2489 | 2430 | 2410 | 2567 |
| Izod impact strength (N · cm/cm) | 119.5 | 138.3 | 124.4 | 93.1 |

TABLE 2

| | Ref. 1 | Ref. 2 | Ref. 3 | Ref. 4 |
|---|---|---|---|---|
| Third reactor<br>Kind<br>$AlR^2_nCl_{3-n}$ | none | TEA | MMA | EtOH |
| $AlR^2_nCl_{3-n}/AlR^1_mCl_{3-m}$ (molar ratio) | 0 | 0.2 | 0.2 | 0.2 |
| Polymerization temp. (°C) | 45 | 45 | 45 | 45 |
| Polymerization time (h) | 1.1 | 0.55 | 1.1 | 1.5 |
| Vapor phase hydrogen concentration (mol %) | 3 | 3 | 3 | 3 |
| Vapor phase propylene concentration (mol %) | 65 | 65 | 65 | 65 |
| Ratio of polymer (3rd reactor) to total yield (%) | 13.9 | 13.5 | 13.4 | 13.5 |
| Final polymer product<br>MFI (g/10 min) | 2.1 | 2.2 | 2.0 | 2.3 |
| Fish-eye | × | × | × | × |
| Brittle point temp. (°C) $T_b$ (MD) | −5.1 | −4.7 | −8.5 | −4.2 |
| Ultimate elongation UE (%) | 486 | 426 | 467 | 409 |
| First yield strength YS ($N/cm^2$) | 2577 | 2646 | 2606 | 2587 |
| Izod impact strength (N · cm/cm) | 88.2 | 80.3 | 82.3 | 90.1 |

TABLE 2'

| | Ref. 5 | Ref. 6 | Ref. 7 | Ref. 8 |
|---|---|---|---|---|
| Third reactor<br>Kind<br>$AlR^2_nCl_{3-n}$ | none | TEA | EADC | EADC |
| $AlR^2_nCl_{3-n}/AlR^1_mCl_{3-m}$ (molar ratio) | 0 | 0.2 | 0.08 | 0.16 |
| Polymerization temp. (°C) | 45 | 45 | 45 | 45 |
| Polymerization time (h) | 1.1 | 0.6 | 1.7 | 2.2 |
| Vapor phase hydrogen concentration (mol %) | 3 | 3 | 3 | 3 |
| Vapor phase propylene concentration (mol %) | 65 | 65 | 65 | 65 |
| Ratio of polymer (3rd reactor) to total yield (%) | 13.4 | 13.0 | 13.4 | 8.0 |
| Final polymer product<br>MFI (g/10 min) | 2.1 | 2.4 | 2.2 | 3.3 |
| Fish-eye | × | × | × | × |
| Brittle point temp. (°C) $T_b$ (MD) | −4.6 | −3.8 | −7.5 | −8.6 |
| Ultimate elongation UE (%) | 495 | 415 | 525 | — |
| First yield strength YS ($N/cm^2$) | 2557 | 2508 | 2499 | — |
| Izod impact strength (N · cm/cm) | 78.4 | 74.4 | 99.9 | — |

Example 15

The homopolymerization of propylene was carried out in the first reactor and the second reactor under the same conditions as set forth in Example 1. The reaction mixture discharged from the second reactor was fed into the third reactor and liquid propylene and ethylene were continuously fed to give a propylene concentration of 65 mol % in the vapor phase and the hydrogen concentration in the vapor phase was controlled to give 3 mol %. A toluene solution of a complex of aluminum trichloride ($AlCl_3$) and butyl ether (DBE) (1:1) was fed to give a molar ratio of $AlCl_3$/DPA of 0.08. In accordance with the process of Example 1 except said modification, the polymerization and the kneading were carried out to produce a press sheet and various physical properties were measured. The results are shown in Table 3.

Examples 16 to 23

The homopolymerization of propylene was carried out in the first reactor and the second reactor under the same conditions as set forth in Example 1.

Each copolymerization of propylene and ethylene in the third reactor was carried out by feeding various mixtures of aluminum compound and electron donor. The kinds and the amounts of the aluminum compound and the electron donor are shown in Table 3. The polymerization condition in the third reactor was varied as shown in Table 3 so as to give the same ratio of the polymer produced in the third reactor. In accordance with the process of Example 15, except said modification, each polymerization and each kneading were carried out to produce each press sheet and various physical properties were measured. The results are shown in Table 3.

Examples 24 to 28

The reactors, used in Example 1, each equipped with a stirrer, were used for a continuous polymerization in two steps. In the first and second reactors, a homopolymerization of propylene was carried out. In the third reactor, a copolymerization of propylene and ethylene was carried out. Into the first reactor, liquid propylene; hydrogen at a content of 5.5 mol % as a vapor phase hydrogen concentration; the titanium trichloride obtained in the step (B) of Preparation of catalyst 2; diethylaluminum monochloride (DEA) at a molar ratio of 8 based on $TiCl_3$; phenyl acetate at a molar ratio of 0.2 based on $TiCl_3$ were charged. The polymerization temperature in the first reactor was 70°C and the average residence time

(polymerization time) was 4.5 hours in the first reactor. The reaction mixture discharged from the first reactor was fed into the second reactor and additional liquid propylene and hydrogen at a content of 6 mol % as a vapor phase hydrogen concentration were also continuously fed. The polymerization temperature in the second reactor was 67°C and the average residence time (polymerization time) was 1.6 hours. The reaction mixture discharged from the second reactor was fed into the third reactor and liquid propylene and ethylene were continuously fed to give 65 mol % of a vapor phase propylene concentration and a vapor phase hydrogen concentration was controlled to be 3 mol %. Various compounds shown in Table 3 were continuously charged. The kinds and the amounts of the compounds are shown in Table 3. The polymerization conditions in the third reactor are shown in Table 3.

The reaction mixture discharged from the third reactor was flushed to purge the unreacted propylene and the polymer obtained by the polymerization was separated as a polymer powder and continuously treated at 120°C with propylene oxide gas. The resulting powdery product was admixed with 0.1 wt.% of BHT, 0.1 wt.% of Irganox®, 0.2 wt.% of dilaurylthiodipropionate and 0.2 wt.% of calcium stearate. The mixture was kneaded at 220°C by a uniaxial extruding machine having an inner diameter of 40 mm and it was pressed to form a press sheet. Various physical properties of the product were measured. The results are shown in Table 3. In accordance with the process of the present invention, fish-eyes, the brittle point $T_b$, the ultimate elongation UE and the Izod impact strength are remarkably improved.

TABLE 3

| | Exp. 15 | Exp. 16 | Exp. 17 | Exp. 18 | Exp. 19 |
|---|---|---|---|---|---|
| Third reactor<br>Kind<br>$AlR^2_nCl_{3-n}$ Electron donor<br>(molar ratio) | $AlCl_3$ · DBE (1:1) | $AlCl_3$ · DBE (1:2) | $AlCl_3$ · DOE (1:1) | $AlCl_3$ · DOE (1:1) | $AlCl_3$ · DPE (1:1) |
| $AlR^2_nCl_{3-n}$ /$AlR^1_mCl_{3-m}$ (molar ratio) | 0.08 | 0.05 | 0.15 | 0.25 | 0.35 |
| Polymerization temp. (°C) | 45 | 45 | 45 | 45 | 45 |
| Polymerization time (h) | 1.5 | 1.3 | 2.2 | 4.0 | 6.0 |
| Vapor phase hydrogen concentration (mol %) | 3 | 3 | 3 | 2.5 | 2.5 |
| Vapor phase propylene concentration (mol %) | 65 | 65 | 65 | 65 | 65 |
| Ratio of polymer (3rd reactor) to total yield (%) | 13.6 | 13.5 | 13.6 | 13.7 | 11.5 |
| Final polymer product<br>MFI (g/10 min) | 2.2 | 2.5 | 2.7 | 2.5 | 2.6 |
| Fish-eye | ◎ | ○ | ◎ | ◎ | ◎ |
| Brittle point temp. (°C) $T_b$ (MD) | −21.4 | −17.2 | −25.2 | −24.2 | −25.4 |
| Ultimate elongation UE (%) | 785 | 745 | 788 | 782 | 826 |
| First yield strength YS (N/cm²) | 2616 | 2538 | 2577 | 2485 | 2695 |
| Izod impact strength (N · cm/cm) | 105.8 | 125.4 | 109.7 | 131.3 | 116.6 |

TABLE 3′

| | Exp. 20 | Exp. 21 | Exp. 22 | Exp. 23 | Exp. 24 |
|---|---|---|---|---|---|
| Third reactor<br>Kind<br>$AlR^2_nCl_{3-n}$ Electron donor<br>(molar ratio) | $AlCl_3\cdot$<br>MMA<br>(1:2) | $AlCl_3\cdot$<br>DBS<br>(1:1) | EADC.<br>DBE<br>(1:0.5) | EADC.<br>DBE<br>(1:1) | $AlCl_3\cdot$<br>DAE<br>(1:1) |
| $AlR^2_nCl_{3-n}/AlR^1_mCl_{3-m}$ (molar ratio) | 0.08 | 0.35 | 0.10 | 0.10 | 0.06 |
| Polymerization temp. (°C) | 45 | 45 | 45 | 45 | 45 |
| Polymerization time (h) | 1.2 | 5.5 | 1.5 | 1.5 | 1.5 |
| Vapor phase hydrogen concentration (mol %) | 3 | 2.5 | 3 | 3 | 3 |
| Vapor phase propylene concentration (mol %) | 65 | 65 | 65 | 65 | 65 |
| Ratio of polymer (3rd reactor) to total yield (%) | 14.2 | 11.8 | 13.7 | 13.6 | 13.3 |
| Final polymer product<br>MFI (g/10 min) | 2.4 | 2.4 | 2.3 | 2.1 | 2.4 |
| Fish-eye | ○ | ◎ | ◎ | ○ | ◎ |
| Brittle point temp. (°C) $T_b$ (MD) | −14.8 | −22.0 | −20.2 | −17.8 | −22.3 |
| Ultimate elongation UE (%) | 655 | 772 | 748 | 732 | 776 |
| First yield strength YS ($N/cm^2$) | 2528 | 2685 | 2528 | 2567 | 2499 |
| Izod impact strength (N · cm/cm) | 132.3 | 96.0 | 109.7 | 107.8 | 101.9 |

TABLE 3'

| | Exp. 25 | Exp. 26 | Exp. 27 | Exp. 28 |
|---|---|---|---|---|
| Third reactor<br>Kind<br>$AlR^2_nCl_{3-n}$ Electron donor<br>(molar ratio) | $AlCl_3$ ·<br>DAE (1:1) | $AlCl_3$ ·<br>DAE (1:2) | EADC.<br>DBE (1:1) | EADC.<br>DOE (1:1) |
| $AlR^2_nCl_{3-n}$ /$AlR^1_mCl_{3-m}$ (molar ratio) | 0.15 | 0.06 | 0.18 | 0.06 |
| Polymerization temp. (°C) | 45 | 45 | 45 | 45 |
| Polymerization time (h) | 2.2 | 1.5 | 2.2 | 1.5 |
| Vapor phase hydrogen concentration (mol %) | 3 | 3 | 3 | 3 |
| Vapor phase propylene concentration (mol %) | 65 | 65 | 65 | 65 |
| Ratio of polymer (3rd reactor) to total yield (%) | 13.2 | 13.2 | 13.5 | 13.4 |
| Final polymer product | | | | |
| MFI (g/10 min) | 2.3 | 2.2 | 2.1 | 2.1 |
| Fish-eye | ◎ | ○ | ◎ | ○ |
| Brittle point temp. (°C) $T_b$ (MD) | −23.1 | −15.6 | −21.4 | −14.3 |
| Ultimate elongation UE (%) | 775 | 725 | 766 | 752 |
| First yield strength YS (N/cm²) | 2538 | 2401 | 2410 | 2528 |
| Izod impact strength (N · cm/cm) | 111.7 | 142.1 | 116.6 | 97.0 |

Example 29

Three reactors, each equipped with a stirrer and which respectively had capacities of 170 l, 70 l and 60 l were connected in series and used for a continuous polymerization in two steps. In the first and second reactors, a homopolymerization of propylene was carried out. In the third reactor, a copolymerization of propylene and ethylene was carried out. Into the first reactor, liquid propylene (12.7 kg/h); hydrogen (2.1 g/h) at a content of 5.5 mol % as a vapor phase hydrogen concentration; diethylaluminum monochloride (DEA) at a molar ratio of 8 based on $TiCl_3$ (0.33 g/h); phenyl acetate at a molar ratio of 0.13 based on $TiCl_3$ were charged. The polymerization temperature in the first reactor was 70°C. The feeding of the solid catalyst component of titanium trichloride treated with propylene (Preparation of catalyst 1) and the discharge of the slurry of polymer were carried out to set in 60 min/cycle as follows: The feeding of the solid catalyst component dispersed in n-hexane was started by a pump just after stopping the discharge of the polymer slurry. The time required for the feeding including the operation time is 5 min and the discharge of the polymer slurry was discontinued for 25 min. During that time, the level in the reactor increased by 25% of the original level. Then, the discharge of the slurry of polymer was started and continued at a constant rate of 50 l/h for 30 min. Thus, the original level in the reactor was re-installed. Then, the discharge of the slurry of polymer was stopped and the feeding of the solid catalyst component was started and the same operation was repeated. The slurry of polymer which was intermittently discharged from the first reactor was fed into the second reactor and additional liquid propylene and hydrogen at a content of 6 mol % as a vapor phase hydrogen concentration were also continuously fed. The polymerization temperature in the second reactor was 67°C and average residence times were respectively 4 hours in the first reactor and 1.5 hours in the second reactor (total of 5.5 hours). The polymer slurry was continuously discharged from the second reactor and fed into a reactor for copolymerization in the second step and liquid propylene (0.5 kg/h) and ethylene (1.5 kg/h) were continuously fed to give 60 mol % of a vapor phase propylene concentration and a vapor phase hydrogen concentration was controlled to be 3 mol %.

Ethylaluminum dichloride (EADC) was charged to give a molar ratio of EADC/DEA of 0.14. The polymerization temperature in the third reactor was 40°C and the average residence time was 2 hours. The polymer slurry was continuously discharged at a rate of 23.8 l/h so as to maintain substantially constant

level. The polymer slurry discharged was flushed to purge the unreacted propylene and the product was treated with propylene oxide gas and dried to obtain a powdery copolymer. The copolymer had an average ratio of the homopolymer to the copolymer of 84:16. The product was admixed with 0.2 wt.% of BHT as a stabilizer and pelletized by using an uniaxial extruding machine having an inner diameter of 40 mm at 200°C. Then, it was sheeted to form a flat sheet having a thickness of 2 mm by means of a small injection molding machine. Various physical properties of the product were measured. As a result, MFI was 2.2; and no formation of gel was visible the brittle point temperatures were −25°C in MD direction and −21°C in TD direction and the Dart drop impact strength at −40°C was 3038 N · cm.

Example 30

A reactor having a capacity of 1.6 $m^3$ and a reactor having a capacity of 0.6 $m^3$ were connected through a classification system in series. The classification system is a combination of a liquid cyclone (having a length to diameter ratio of 2 and a ratio of taper part to diameter of 3) and a hydraulic sedimentation classifier (having a ratio of length to diameter of 7 and a ratio of bottom taper part to diameter of 1.2). The first reactor was used for a homopolymerization of propylene and the second reactor was used for a copolymerization of propylene and ethylene to continuously produce a propylene-ethylene block copolymer. (See Figure 2).

Into the first reactor, liquid propylene, hydrogen and the catalyst were continuously fed to perform a bulk polymerization. The catalyst was a combination of polypropylene-containing titanium trichloride obtained in Preparation of catalyst 1 and diethylaluminum chloride at a molar ratio of diethylaluminum chloride to $TiCl_3$ of 3. The polymerization temperature was 70°C and the polymerization pressure was 32.3 Bar G and the vapor phase hydrogen concentration was 5.5 mol % and the average residence time was 4 hours. The level was controlled to maintain in a volume of 1 $m^3$.

The slurry of polypropylene discharged from the reactor had a polymer concentration of about 45 wt.%. The slurry was fed by a pump at a rate of about 5 $m^3$/h to a liquid cyclone. From the upper part of the cyclone, a supernatant having a grain concentration of about 0.002 wt.% was discharged. From the bottom of the cyclone, a concentrated slurry having a solid concentration of about 53 wt.% was discharged. The supernatant was fed to the lower part of the hydraulic sedimentation classifier at a rate of 1.0 $m^3$/h and the concentrated slurry was fed to the upper part of the classifier at a rate of 4.0 $m^3$/h. The slurry discharged from the classifier had a solid concentration of about 45 wt.% and was returned at a rate of 4.75 $m^3$/h to the first reactor (reactor for polymerization of propylene) and the slurry discharged from the bottom of the classifier had a solid concentration of about 45 wt.% and was fed at a rate of 0.25 $m^3$/h to the second reactor (reactor for copolymerization). The ratio of the slurry (fine grains-containing slurry) returned to the first reactor to the slurry (coarse grain slurry) fed into the second reactor was 95:5 by weight.

Into the reactor for copolymerization, ethylene, liquid propylene and hydrogen were fed at a vapor phase propylene concentration of 60—65 mol % and a hydrogen concentration to the sum of ethylene and propylene of 3 mol %. Ethylaluminum dichloride was continuously fed at a molar ratio of ethylaluminum dichloride to diethylaluminum chloride charged in the first reactor of 0.08. The polymerization temperature was 45°C and the average residence time was 1.5 h and the polymerization pressure was kept at 29 Bar G. The propylene-ethylene random copolymer was produced at a ratio of the copolymer to the final polymer product of 13.5 wt.%.

The resulting polymer slurry was flushed to purge the unreacted propylene and the product was treated with methanol gas and dried to produce a powdery polymer at a productivity of about 69 kg/h.

The resulting polymer was admixed with 0.2 wt.% of BHT and was pelletized by using a uniaxial extruding machine having an inner diameter of 40 mm and was sheeted to form a flat sheet having a thickness of 2 mm and a size of 100×100 mm by means of a small injection molding machine. The final polymer product had a melt flow index of 2.5 (melt flows index of the copolymer of 0.001), a brittle point temperature of −25°C in MD direction and −17°C in TD direction and a Dart drop impact strength of 2695 N · cm. No formation of gel was visible in the flat sheet. The fine gel was evaluated by the tester to find only 40 gels.

Example 31

The systems of Example 30 were used. In accordance with the process of Example 30 except that the molar ratio of ethylaluminum dichloride to diethylaluminum monochloride charged in the first reactor was controlled to 0.16 and that the average residence time was varied to 1.8 hours so as to give a ratio of the copolymer to the final polymer product of 13.5 wt.% the polymerization and tests were carried out. The results are shown in Table 4.

Example 32

The systems of Example 30 were used. In accordance with the process of Example 30 except that ethylaluminum sesquichloride instead of ethylaluminum dichloride was charged at a molar ratio of ethylaluminum sesquichloride to diethylaluminum monochloride charged in the first reactor of 0.21 and that the average residence time was varied to 1.8 hours so as to give a ratio of the copolymer to the final polymer product of 13.5 wt.% the polymerization and tests were carried out. The results are shown in Table 4.

Example 33

In accordance with the process of Example 30, the rate of the discharge of the polypropylene slurry from the first reactor was reduced to 1.2 $m^3/h$ and the liquid cyclone and the hydraulic sedimentation classifier were replaced by similar devices having each a capacity of 1/2 and the average residence time in the first reactor was varied to 2 hours. A supernatant having a grain concentration of about 0.01 wt.% was discharged from the upper part of the liquid cyclone at a rate of 0.6 $m^3/h$ and a concentrated slurry having a solid concentration of 42.4 wt.% was discharged from the bottom of the liquid cyclone at a rate of 0.6 $m^3/h$. The supernatant was fed to the lower part of the hydraulic sedimentation classifier and the concentrated slurry was fed to the upper part of the classifier. The slurry discharged from the upper part of the classifier had a solid concentration of about 30 wt.% and was returned to the first reactor (reactor for polymerization of propylene) at a rate of 0.7 $m^3/h$. The slurry discharged from the bottom of the classifier had a solid concentration of 30 wt.% and fed into the second reactor (reactor for copolymerization) at a rate of 0.5 $m^3/h$. The ratio of the slurry returned to the first reactor (fine grains-containing slurry) to the slurry fed to the second reactor (coarse grain slurry) was 58:42 by weight.

In accordance with the process of Example 30 except that the amount of ethylaluminum dichloride was controlled to give a molar ratio of ethylaluminum dichloride to diethylaluminum monochloride charged in the first reactor of 0.16 and that the polymerization temperature was varied to 40°C so as to give a ratio of the copolymer to the final polymer product of 14 wt.%, the copolymerization was carried out in the reactor for copolymerization to obtain a powdery polymer at a productivity of 84 kg./h and tests were carried out. The results are shown in Table 4.

TABLE 4

| | Exp. 30 | Exp. 31 | Exp. 32 | Exp. 33 |
|---|---|---|---|---|
| Condition of classification | | | | |
| Flow rate of ③ ($m^3/h$) | 5 | 5 | 5 | 1.2 |
| Solid concentration of ③ (wt.%) | 45 | 45 | 45 | 30 |
| Flow rate of ④ ($m^3/h$) | 1.0 | 1.0 | 1.0 | 0.6 |
| Solid concentration of ④ (wt.%) | 0.002 | 0.002 | 0.002 | 0.01 |
| Flow rate of ⑥ ($m^3/h$) | 4.75 | 4.75 | 4.75 | 0.7 |
| Flow rate of ⑦ ($m^3/h$) | 0.25 | 0.25 | 0.25 | 0.5 |
| Ratio of flow rate ⑥/⑦ (wt:ratio) | 95/5 | 95/5 | 95/5 | 58/42 |
| Condition of copolymerization | | | | |
| Additional aluminum halide kind | EADC | EADC | EASC | EADC |
| Amount (molar ratio) | 0.08 | 0.16 | 0.21 | 0.16 |
| Polymerization temperature (°C) | 45 | 45 | 45 | 40 |
| Residence time (h) | 1.5 | 1.8 | 1.8 | 1.5 |
| Ratio of copolymer to final polymer (wt.%) | 13.5 | 13.5 | 13.5 | 14 |
| Productivity (kg/h) | 69 | 69 | 69 | 84 |
| Result | | | | |
| MFI (g/10 min.) | 2.5 | 2.3 | 2.2 | 2.2 |
| $T_b$ MD direct. (°C) | −25 | −27 | −24 | −29 |
| $T_b$ TD direct. (°C) | −17 | −19 | −17 | −15 |
| Dart drop impact strength (N · cm) | 2695 | 3038 | 2744 | 2450 |
| Fine gels | ○ | ○ | ○ | ○ |

Figure 1

*1: First step polymerization of propylene
*2: Second step copolymerization
*3: First reactor
*4: Second reactor
*5: Propylene feed
*6: Hydrogen feed
*7: Catalyst 2nd and 3rd component feed
*8: Solid catalyst component feed
*9: Slurry discharge
*10: Level
*11: Additional propylene feed
*12: Additional hydrogen feed
*13: Slurry discharge
*14: Level
*15: Ethylene feed
*16: Additional hydrogen feed
*17: Catalyst Al comp. feed
*18: Slurry discharge
*19: Level

## Claims

1. A continuous process for producing a propylene-ethylene block copolymer in the presence of a catalyst comprising, as main components, a solid titanium-containing catalyst component and an organoaluminum compound having the formula

$$AlR^1_mCl_{3-m}$$

($R^1$ represents a $C_{1-20}$ hydrocarbon moiety; and m is such that $3 \geq m > 1.5$) wherein a homopolymer of propylene or a propylene-ethylene copolymer is produced in a first step by polymerizing propylene or both propylene and ethylene at a vapor phase propylene concentration of 90 mol % or higher based on the sum of propylene and ethylene and a propylene-ethylene block copolymer is produced in a second step by copolymerizing propylene and ethylene at a vapor phase propylene concentration of less than 90 mol % based on the sum of propylene and ethylene in the presence of the polymer and the catalyst resulting from the 1st step, said process being characterized in that an aluminum compound having the formula

$$AlR^2_nX_{3-n}$$

($R^2$ represents a $C_{1-20}$ hydrocarbon moiety; X represents a halogen atom and n is such that $1.5 \geqq n \geqq 0$) is added to the components to be copolymerized in the second step.

2. The process for producing the block copolymer according to Claim 1 wherein said solid titanium-containing catalyst component comprises titanium trichloride, an aluminum halide compound having the formula

$$AlR^3_pX_{3-p}$$

($R^3$ represents a $C_{1-20}$ hydrocarbon moiety; X represents a halogen atom and p is $0 \leqq p \leqq 2$) at an atomic ratio of Al to Ti of titanium trichloride of 0.15 or less; and a chelating agent at a molar ratio of the chelating agent to the sum of the aluminum halide compound and titanium trichloride of 0.001 or more.

3. The process for producing the block copolymer according to Claim 1 wherein said solid titanium-containing catalyst component is obtained by precipitation at 150°C or lower from a liquid containing titanium trichloride dissolved in the presence of an ether or thioether.

4. The process for producing the block copolymer according to Claim 1 wherein said solid titanium-containing catalyst component is obtained by reducing titanium tetrachloride with an organoaluminum compound or aluminum metal and treating the resulting solid titanium trichloride with a chelating agent or a halide compound.

5. The process for producing the block copolymer according to Claim 1 wherein the molar ratio of said aluminum compound added in the second step to said organoaluminum compound used in the first step is in a range of 0.01 to 0.50.

6. The process for producing the block copolymer according to Claim 1 wherein said aluminum compound is added in a form of a complex with an electron donor in the second step.

7. The process for producing the block copolymer according to Claim 1 wherein said aluminum

compound is added in the form of a mixture of said aluminum compound and an electron donor in the second step.

8. The process for producing the block copolymer according to Claim 1 wherein said solid titanium containing catalyst component is intermittently fed in the first step and the polymer is intermittently discharged from the first step and the discharge of the polymer is stopped during the time of feeding the solid catalyst component and during a certain period of time thereafter, said period of time being from 5 to 50% of the residence time of the components in the first step.

9. The process for producing the block copolymer according to Claim 1 wherein the polymerization in the first step is carried out in two or more reactors connected in series.

10. The process for producing the block copolymer according to Claim 9 wherein said solid titanium-containing catalyst component is intermittently fed in the first step and the polymer is intermittently discharged from the first step and the discharge of the polymer is stopped during the time of feeding the solid catalyst component and during a certain period of time thereafter, said period of time being from 5 to 50% of the residence time of the components in the first step.

11. The process for producing the block copolymer according to Claim 1 wherein a classification system is provided between the first step and the second step.

12. The process for producing the block copolymer according to Claim 11 wherein said classification system is a concentrator.

13. The process for producing the block copolymer according to claim 11 wherein said classification system is a combination of a concentrator and a hydraulic sedimentation classifier.

14. The process for producing the block copolymer according to claim 12 wherein said concentrator is a liquid cyclone.

15. The process for producing the block copolymer according to Claim 13 wherein said hydraulic sedimentation classifier has a form of a cylindrical part and a tapered bottom connected to the lower part of the cylindrical part.

16. The process for producing the block copolymer according to Claim 11 wherein a ratio of a slurry returned from said classification system to the first step to a slurry fed to the second step is in a range of 30:70 to 99:1 by weight.

**Patentansprüche**

1. Kontinuierliches Verfahren zur Herstellung eines Propylen-Äthylen-Blockcopolymeren in Gegenwart eines Katalysators, umfassend als Hauptkomponente eine feste titan-haltige Katalysatorkomponente und eine Organoaluminiumverbindung der Formel

$$AlR^1_mCl_{3-m}$$

wobei $R^1$ eine $C_{1-20}$-Kohlenwasserstoffeinheit bedeutet und m derart ist, daß $3 \geq m > 1{,}5$ gilt, wobei ein Homopolymeres von Propylen oder ein Propylen-Äthylen-Copolymeres in einer ersten Stufe erzeugt wird durch Polymerisation von Propylen oder von Propylen und Äthylen bei einer Gasphasen-Propylenkonzentration von 90 Mol-% oder höher, bezogen auf die Summe von Propylen und Äthylen, und ein Propylen-Äthylen-Blockcopolymeres in einer zweiten Stufe erzeugt wird durch Copolymerisation von Propylen und Äthylen bei einer Gasphasen-Propylenkonzentration von weniger als 90 Mol-%, bezogen auf die Summe von Propylen und Äthylen, in Gegenwart des Polymeren und des Katalysators aus der ersten Stufe, dadurch gekennzeichnet, daß man eine Aluminiumverbindung der Formel

$$AlR^2_nX_{3-n}$$

wobei $R^2$ eine $C_{1-20}$ Kohlenwasserstoffeinheit bedeutet; X ein Halogenatom bedeutet und n derart ist, daß $1{,}5 \geqq n \geqq 0$ gilt, zu den Komponenten gibt, die in der zweiten Stufe copolymerisiert werden sollen.

2. Verfahren zur Herstellung des Blockcopolymeren nach Anspruch 1, wobei die feste titanhaltige Katalysatorkomponente Titantrichlorid, eine Aluminiumhalogenid-Verbinding der Formel

$$AlR^3_pX_{3-p}$$

wobei $R^3$ für eine $C_{1-20}$-Kohlenwasserstoffeinheit steht; X für ein Halogenatom steht und p derart ist, daß $0 \leqq p \leqq 2$ gilt, mit einem Atomverhältnis von Al zu Ti des Titantrichlorids von 0,15 oder weniger und ein Chelatisiermittel mit einem Molverhältnis des Chelatisiermittels der Summe von der Aluminiumhalogenid-Verbindung und Titantrichlorid von 0,001 oder mehr umfaßt.

3. Verfahren zur Herstellung des Blockcopolymeren gemäß Anspruch 1, wobei die feste titan-haltige Katalysatorkomponente erhalten wird durch Fällung bei 150°C oder darunter, aus einer Flüssigkeit enthaltend Titantrichlorid, aufgelöst in Anwesenheit eines Äthers oder Thioäthers.

4. Verfahren zur Herstellung des Blockcopolymeren gemäß Anspruch 1, wobei die feste titan-haltige Katalysatorkomponente erhalten wurde durch Reduktion von Titantetrachlorid mit einer Organoaluminiumverbindung oder Aluminiummetall und Behandlung des resultierenden festen Titantrichlorids einem Chelatisiermittel oder einer Halogenidverbindung.

5. Verfahren zur Herstellung des Blockcopolymeren gemäß Anspruch 1, wobei das Molverhältnis der in der zweiten Stufe zugesetzten Aluminiumverbindung zu der in der ersten Stufe verwendeten Organoaluminiumverbindung in einem Bereich von 0,01 bis 0,50 liegt.

6. Verfahren zur Herstellung des Blockcopolymeren gemäß Anspruch 1, wobei die Aluminiumverbindung in Form eines Komplexes mit einem Elektronendonor in der zweiten Stufe zugesetzt wird.

7. Verfahren zur Herstellung des Blockcopolymeren gemäß Anspruch 1, wobei die Aluminiumverbindung in Form einer Mischung der Aluminiumverbindung und eines Elektronendonors in der zweiten Stufe zugesetzt wird.

8. Verfahren zur Herstellung des Blockcopolymeren gemäß Anspruch 1, wobei die feste titan-haltige Katalysatorkomponente intermittierend in die erste Stufe eingespeist wird und das Polymere intermittierend aus der ersten Stufe entnommen wird und die Entnahme des Polymeren während der Zeit der Einspeisung der festen Katalysatorkomponente und während einer gewissen Zeitspanne danach gestoppt wird, wobei die Zeitspanne 5 bis 50% der Verweilzeit der Komponenten in der ersten Stufe beträgt.

9. Verfahren zur Herstellung des Blockcopolymeren gemäß Anspruch 1, wobei die Polymerisation in der ersten Stufe in zwei oder mehr Reaktoren durchgeführt wird, die in Serie geschaltet sind.

10. Verfahren zur Herstellung des Blockcopolymeren gemäß Anspruch 9, wobei die feste titan-haltige Katalysatorkomponente intermittierend in die erste Stufe eingespeist wird und das Polymere intermittierend aus der ersten Stufe entnommen wird und die Entnahme des Polymeren während der Zeit der Einspeisung der festen Katalysatorkomponente und während einer gewissen Zeitspanne danach gestoppt wird, wobei die Zeitspanne von 5 bis 50% der Verweilzeit der Komponente in der ersten Stufe beträgt.

11. Verfahren zur Herstellung des Blockcopolymeren gemäß Anspruch 1, wobei ein Klassifizierungssystem zwischen der ersten Stufe und der zweiten Stufe vorgesehen ist.

12. Verfahren zur Herstellung des Blockcopolymeren gemäß Anspruch 11, wobei das Klassifizierungssystem ein Konzentrator ist.

13. Verfahren zur Herstellung des Blockcopolymeren gemäß Anspruch 11, wobei das Klassifizierungssystem eine Kombination aus einem Konzentrator und einem hydraulischen Sedimentationsklassifizierer ist.

14. Verfahren zur Herstellung des Blockcopolymeren gemäß Anspruch 12, wobei der Konzentrator ein Flüssigkeitszyklon ist.

15. Verfahren zur Herstellung des Blockcopolymeren gemäß Anspruch 13, wobei der hydraulische Sedimentationsklassifizierer eine Form aufweist, welche einen zylindrischen Teil und einen sich am unteren Teil des zylindrischen Teils anschließenden abgeschrägten Boden umfaßt.

16. Verfahren zur Herstellung des Blockcopolymeren gemäß Anspruch 11, wobei ein Verhältnis der Aufschlämmung, die aus dem Klassifizierungssystem in die erste Stufe zurückgeführt wird, zu der Aufschlämmung, die in die zweite Stufe eingespeist wird, im Bereich von 30:70 bis 99:1 nach Gewicht eingehalten wird.

**Revendications**

1. Procédé en continu pour la production d'un copolymère séquencé de propylène-éthylène en présence d'un catalyseur comprenant, à titre de constituants principaux, un constituant de catalyseur solide contenant du titane et un composé organoaluminique répondant à la formule

$$AlR^1_mCl_{3-m}$$

($R^1$ représente un fragment d'hydrocarbure en $C_{1-20}$; et m est tel que $3 \geq m > 1,5$) dans lequel un homopolymère de propylène ou un copolymère de propylène-éthylène est produit dans une première étape en polymérisant le propylène ou le propylène et l'éthylène ensemble à une concentration en propylène en phase vapeur de 90% en mole ou plus par rapport à la somme du propylène et de l'éthylène et dans lequel le copolymère séquencé de propylène-éthylène est produit dans une seconde étape en copolymérisant le propylène et l'éthylène à une concentration en propylène en phase vapeur inférieure à 90% en mole par rapport à la somme du propylène et de l'éthylène en présence du polymère et du catalyseur résultant de la première étape, ledit procédé étant caractérisé en ce qu'on ajoute un composé aluminique répondant à la formule

$$AlR^2_nX_{3-n}$$

($R^2$ représente un fragment d'hydrocarbure en $C_{1-20}$; X représente un atome d'halogène et n est tel que $1,5 \geqq n \geqq 0$) aux constituants devant être copolymérisés dans la seconde étape.

2. Procédé pour la production du copolymère séquencé selon la revendication 1, caractérisé en ce que ledit constituant de catalyseur solide contenant du titane comprend du trichlorure de titane, un halogènure d'aluminium répondant à la formule

$$AlR^3_pX_{3-p}$$

($R^3$ représente un fragment d'hydrocarbure en $C_{1-20}$; X représente un atome d'halogène et p est tel que $0 \leqq p \leqq 2$) dans un rapport atomique de Al à Ti du trichlorure de titane de 0,15 ou moins; et un agent de chelation dans un rapport molaire de l'agent de chélation à la somme de l'halogénure d'aluminium et du trichlorure de titane de 0,001 ou plus.

3. Procédé pour la production du copolymère séquencé selon la revendication 1, caractérisé en ce que ledit constituant de catalyseur solide contenant du titane est obtenu par précipitation à 150°C ou moins à partir d'un liquide contenant le trichlorure de titane dissous en présence d'un éther ou d'un thioéther.

4. Procédé pour la production du copolymère séquencé selon la revendication 1, caractérisé en ce que ledit constituant de catalyseur solide contenant du titane est obtenu en réduisant le tétrachlorure de titane avec un composé organoaluminique ou de l'aluminium métallique et en traitant le trichlorure de titane solide résultant avec un agent de chélation ou un composé d'halogénure.

5. Procédé pour la production du copolymère séquencé selon la revendication 1, caractérisé en ce que le rapport molaire dudit composé aluminique ajouté dans la seconde étape audit composé organoaluminique utilisé dans la première étape est compris dans un intervalle de 0,01 à 0,50.

6. Procédé pour la production du copolymère séquencé selon la revendication 1, caractérisé en ce que ledit composé aluminique est ajouté dans la seconde étape sous la forme d'un complexe avec un donneur d'électrons.

7. Procédé pour la production du copolymère séquencé selon la revendication 1, caractérisé en ce que ledit composé aluminique est ajouté dans la seconde étape sous la forme d'un mélange dudit composé aluminique et dudit donneur d'électrons.

8. Procédé pour la production du copolymère séquencé selon la revendication 1, caractérisé en ce que ledit constituant de catalyseur solide contenant du titane est introduit par intermittence dans la première étape, en ce que le polymère est déchargé par intermittence de la première étape et en ce que le déchargement du polymère est arrêté pendant l'alimentation en constituant de catalyseur solide et pendant un certain laps de temps qui suit, ledit laps de temps étant de 5 à 50% du temps de séjour des constituants dans la première étape.

9. Procédé pour la production du copolymère séquencé selon la revendication 1, caractérisé en ce que la polymérisation dans la première étape est effectuée dans deux ou plusieurs réacteurs montés en série.

10. Procédé pour la production du copolymère séquencé selon la revendication 9, caractérisé en ce que ledit constituant de catalyseur solide contenant du titane est introduit par intermittence dans la première étape, en ce que le polymère est déchargé par intermittence de la première étape et en ce que le déchargement du polymère est arrêté pendant l'alimentation en constituant de catalyseur solide et pendant un certain laps de temps qui suit, ledit laps de temps étant de 5 à 50% du temps de séjour des constituants dans la première étape.

11. Procédé pour la production du copolymère séquencé selon la revendication 1, caractérisé en ce qu'un système de classification est placé entre la première étape et la seconde étape.

12. Procédé pour la production du copolymère séquence selon la revendication 11, caractérisé en ce que ledit système de classification est un concentrateur.

13. Procédé pour la production du copolymère séquencé selon la revendication 11, caractérisé en ce que ledit système de classification est une combinaison d'un concentrateur et d'un classificateur de sédimentation hydraulique.

14. Procédé pour la production du copolymère séquencé selon la revendication 12 caractérisé en ce que ledit concentrateur est un cyclone à liquide.

15. Procédé pour la production du copolymère séquencé selon la revendication 13, caractérisé en ce que ledit classificateur de sédimentation hydraulique possède la forme d'un élément cylindrique, un fond conique étant relié à la partie inférieur de l'élément cylindrique.

16. Procédé pour la production du copolymère séquencé selon la revendication 11, caractérisé en ce que le rapport de la masse renvoyée dudit système de classification vers la première étape à la masse amenée vers la seconde étape est compris dans un intervalle de 30:70 à 99:1 en poids.

FIG. 1

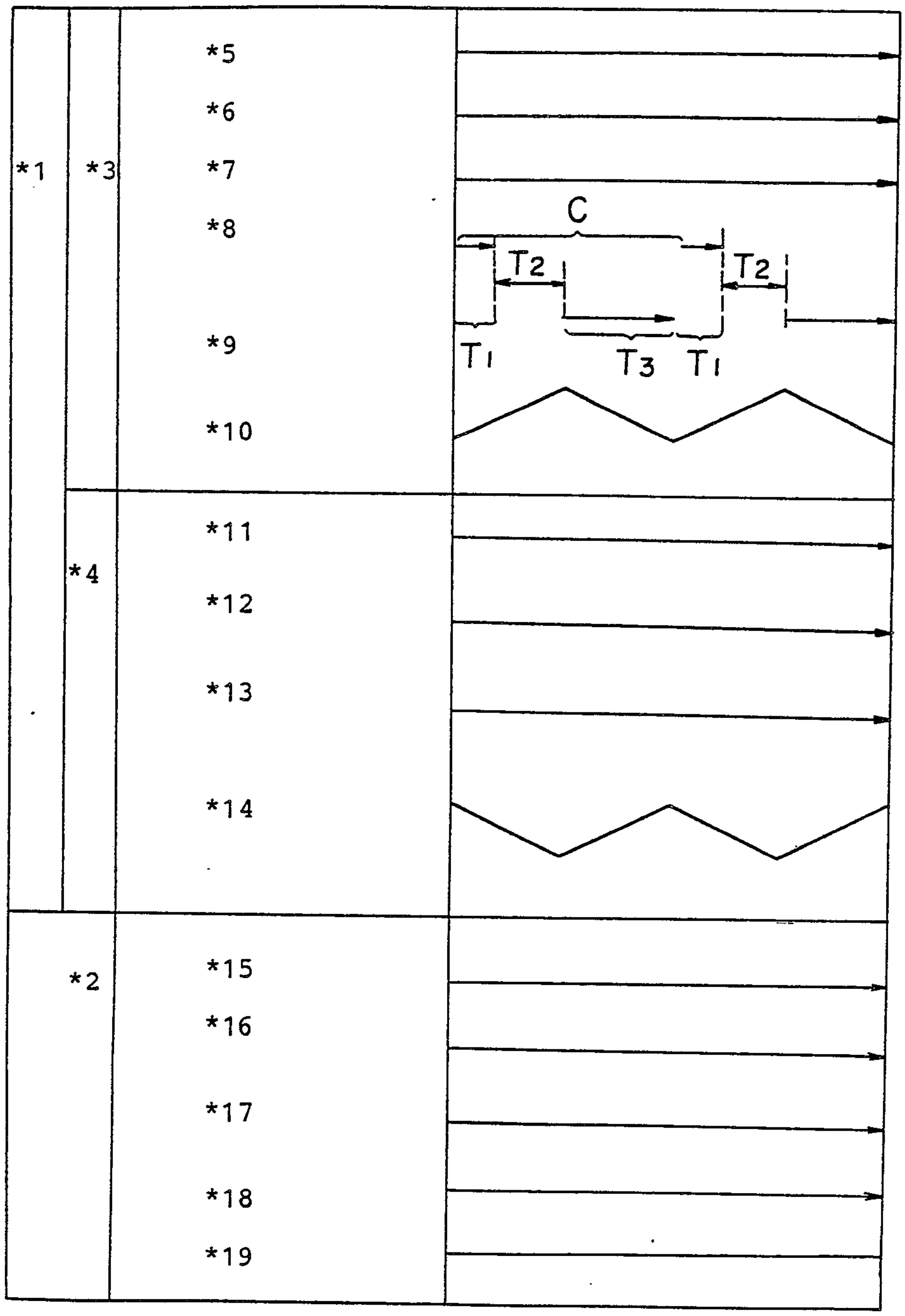

FIG. 2

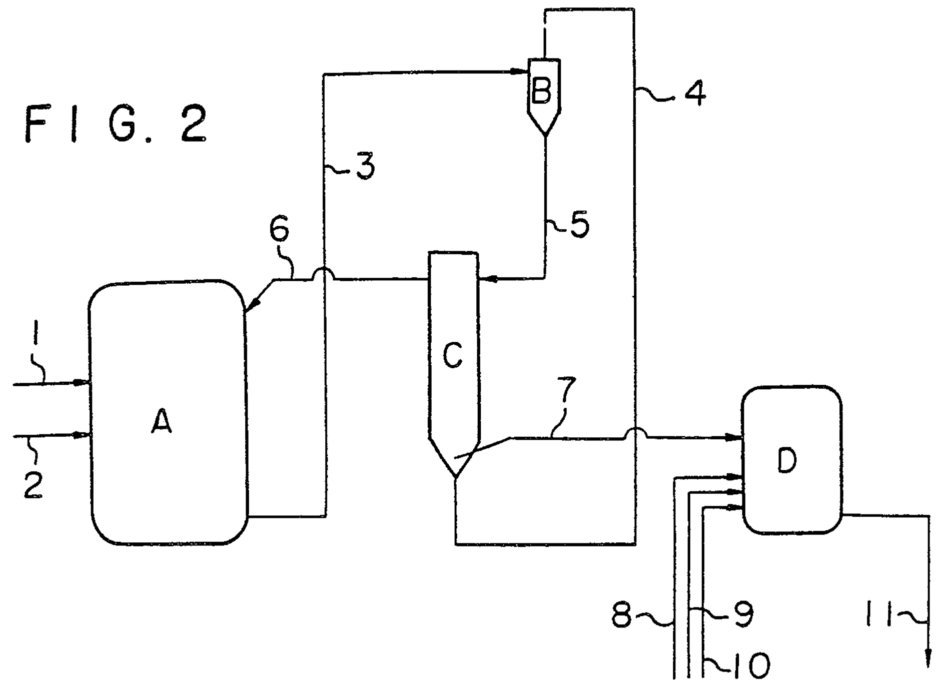


FIG. 3

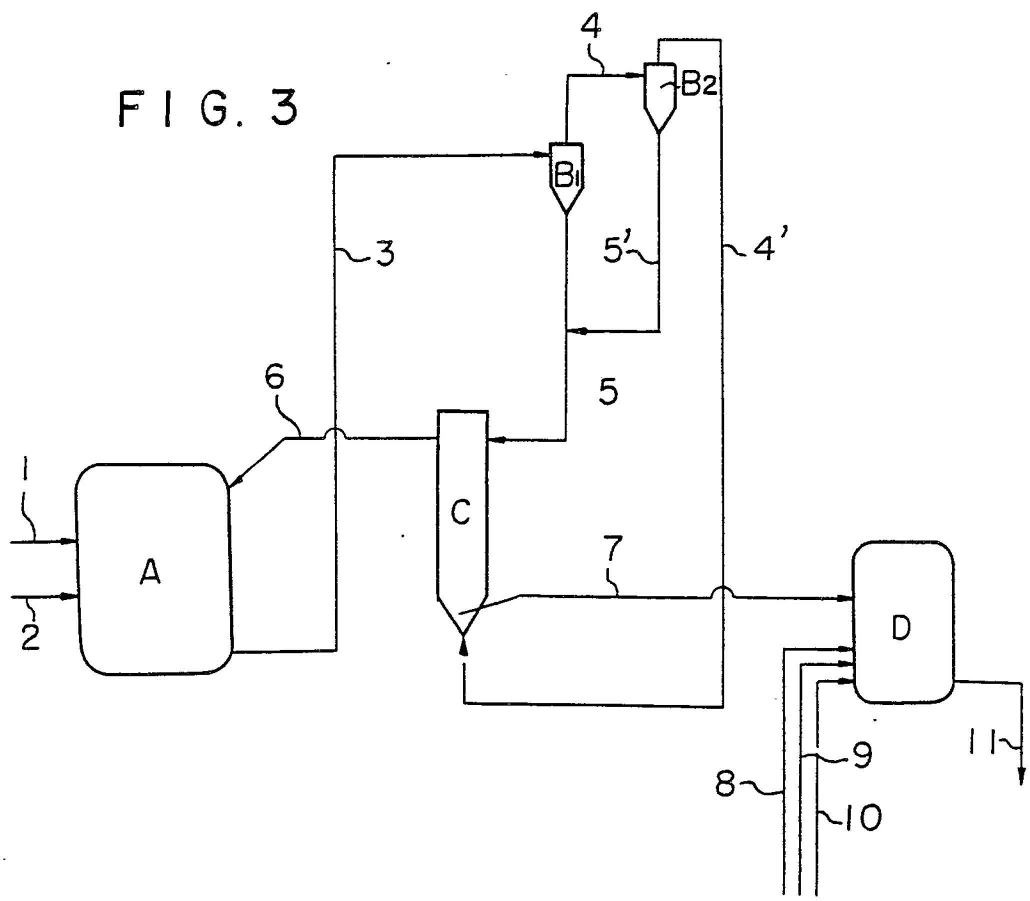

FIG. 4